# EUROPÄISCHE PATENTSCHRIFT

(11) **EP 3 600 991 B1**
(45) Veröffentlichungstag und Bekanntmachung des Hinweises auf die Patenterteilung: **29.09.2021**
(21) Anmeldenummer: 18715522.1
(22) Anmeldetag: 20.03.2018
(51) Int. Cl.: B60T 13/26, B60T 13/38, B60T 13/68, B60T 8/17, B60T 8/32

(54) **ELEKTRO-PNEUMATISCHE HANDBREMSE (EPH) MIT INTEGRIERTEN TCV (SKANDINAVISCHE ANSTEUERUNG)**
ELECTRO PNEUMATIC HAND BRAKE WITH INTEGRATED TCV (SCANDINAVIAN ACTIVATION)
FREIN À MAIN ÉLECTRO-PNEUMATIQUE AVEC TCV INTEGRÉ (COMMANDE SCANDINAVE)

(30) Priorität: 21.03.2017 DE 102017002714; 24.06.2017 DE 102017005979
(43) Veröffentlichungstag der Anmeldung: 05.02.2020
(73) Patentinhaber: ZF CV Systems Hannover GmbH, 30453 Hannover (DE)
(72) Erfinder: VAN THIEL, Julian, 30938 Grossburgwedel (DE)
(74) Vertreter: Schiller, Harald
(86) Internationale Anmeldenummer: PCT/EP2018/056981
(87) Internationale Veröffentlichungsnummer: WO 2018/172333

(56) Entgegenhaltungen:
- EP-A1- 1 780 087
- EP-A2- 1 022 204
- DE-A1-102015 112 490

## Beschreibung

Die Erfindung betrifft ein elektropneumatisches Steuermodul für ein elektronisch steuerbares pneumatisches Bremssystem für einen Fahrzeugzug mit einem Zugwagen und einem Anhängerwagen, mit einem pneumatischen Vorratseingang, der mit einem Druckluftvorrat verbindbar ist, einer Anhängersteuereinheit, die eine Anhängersteuer-Ventileinheit mit einem oder mehreren elektropneumatischen Ventilen, einen Anhängerbremsdruckanschluss und einen Anhängerversorgungsdruckanschluss aufweist, einer Feststellbremseinheit, die einen Federspeicher-Anschluss für einen Federspeicher für einen Zugwagen und eine Feststellbrems-Ventileinheit mit einem oder mehreren elektropneumatischen Ventilen aufweist, und einer elektronischen Steuereinheit zum Steuern der Anhängersteuer-Ventileinheit und der Feststellbrems-Ventileinheit, wobei die Anhängersteuer-Ventileinheit ein erstes Relaisventil aufweist, welches einen mit dem Vorratseingang verbundenen Relaisventil-Arbeitseingang, einen mit dem Anhängerbremsdruckanschluss verbundenen Relaisventil-Ausgang, und einen Relaisventil-Entlüftungsausgang aufweist, über den der Relaisventil-Ausgang mit einer Drucksenke verbindbar ist. Ferner betrifft die Erfindung einen Zugwagen mit einem elektropneumatischen Steuermodul der eingangs genannten Art.

In Fahrzeugen, insbesondere Nutzfahrzeugen, mit einem pneumatischen Bremssystem, insbesondere ausgebildet als elektronisches Bremssystem (EBS) oder Antiblockiersystem (ABS) können zum Aussteuern von Bremsdrücken von einer Steuereinheit (ECU) elektropneumatische Ventile, beispielsweise Relaisventile oder Achsmodulatoren, angesteuert werden, die dann in Abhängigkeit einer angeforderten Fahrzeug-Soll-Verzögerung pneumatisch einen Bremsdruck an die Bremszylinder von Betriebsbremsen des Bremssystems weiterleiten.

Bei Bremssystemen für einen Fahrzeugzug weist das Bremssystem eine Anhängersteuereinheit, auch Trailer Control Valve (TCV) genannt, auf, die dazu vorgesehen ist, die von dem Zugwagen vorgegebenen Fahrzeug-Soll-Verzögerungen entsprechend auch über Anschlüsse, nämlich einen Anhängerbremsdruckanschluss und einen Anhängerversorgungsdruckanschluss, die auch als gelber und roter Kupplungskopf bezeichnet werden, pneumatisch auszusteuern. Über den Anhängerversorgungsdruckanschluss wird der Anhängerwagen mit einem Versorgungsdruck aus einem dafür vorgesehenen Vorrat des Zugwagens versorgt, während über den Anhängerbremsdruckanschluss der entsprechende Bremsdruck ausgesteuert wird.

Als ein weiteres Bauteil oder Modul weisen Bremssysteme der vorstehenden Gattung eine Feststellbremseinheit, auch als elektropneumatische Handbremse (EPH) bezeichnet, auf. Solche Feststellbremseinheiten werden üblicherweise mit sogenannten Federspeichern betrieben, also Bremseinrichtungen, die aufgrund einer Federkraft eine oder mehrere Achsen des Zufahrzeugs bremsen. Im belüfteten Zustand sind die Bremsen gelöst und im entlüfteten Zustand gebremst. In einem drucklosen Zustand wird das entsprechende Fahrzeug also gebremst. Zur Aktivierung der Feststellbremseinheit ist in der Regel in der Fahrerkabine des Zugwagens ein elektrischer Schalter vorgesehen, über den ein entsprechendes Signal an eine elektronische Steuereinheit ausgebbar ist, die dann ein oder mehrere elektropneumatische Ventile so schaltet, dass die Federspeicher entweder ent- oder belüftet werden.

Die Feststellbremseinheit, also die elektropneumatische Handbremse, wird zum Parken des Fahrzeugzugs aber auch als Zusatzbremse in besonderen Situationen verwendet. Das heißt, neben dem normalen Betriebsbremsen werden die Federspeicher wenigstens teilweise entlüftet, um diese zusätzlich oder alternativ zur Bremsung zu verwenden. Um hier ein entsprechendes Bremssignal auch für den Anhängerwagen pneumatisch auszusteuern, wird in der Regel ein sogenanntes inverses Relaisventil verwendet, welches basierend auf einem sinkenden Druck in den Federspeichern einen steigenden Druck aussteuert. Solche inversen Relaisventile sind in ihrer Bauart aufwendig und weisen mehrere Steuerkolben auf, die über verschiedene Steuerflächen und verschiedene Steuerkammern miteinander interagieren. So wird z.B. bei einem reinen Hilfsbremsen ausschließlich über Federspeicher im Zugfahrzeug und Betriebsbremsen im Anhängerwagen gebremst. Die Betriebsbremsen im Zugfahrzeug sind beim reinen Hilfsbremsen unbetätigt. Alternativ kann auch ein Redundanzmodus umgesetzt werden, wo z.B. bei einem Kreisausfall an der Hinterachse alternativ zu den Betriebsbremsen die Federspeicher zur Hilfe genommen werden. Die Vorderachse kann weiterhin über Betriebsbremsen gebremst werden, und der Anhängerwagen ebenfalls über Betriebsbremsen.

Ferner wird bei Bremssystemen der eingangs genannten Art zwischen der sogenannten "europäischen Anhängersteuerung" und der "skandinavischen Anhängersteuerung" unterschieden. Während bei der "europäischen Anhängersteuerung" im abgestellten Zustand des Fahrzeugzugs ein den entlüfteten Federspeichern entsprechender positiver Bremsdruck an dem Anhängerwagen ausgesteuert wird, um diesen zusätzlich zu bremsen, ist bei der "skandinavischen Anhängersteuerung" das Gegenteil der Fall: Im abgestellten Zustand des Fahrzeugzugs sollen die Betriebsbremsen des Anhängerwagens gelöst sein. Das bedeutet, bei der "europäischen Anhängersteuerung" muss im abgestellten Zustand des Fahrzeugzugs, also im stromlosen Zustand, permanent ein positiver Bremsdruck über die Anhängersteuereinheit (TCV) an die Betriebsbremsen des Anhängerwagens ausgesteuert werden.

Da in der Praxis also die Anhängersteuereinheit (TCV) und die Feststellbremseinheit (EPH) interagieren, hat sich eine Integration dieser beiden Module als wünschenswert herausgestellt. Ein erster Ansatz der Integration ist beispielsweise in DE 10 2016 003 034 A1 offenbart. Während früher die Feststellbremseinheit (EPH) häufig in eine Druckluftaufbereitungseinheit integriert wurde, schlägt DE 10 2016 003 034 A1 vor, die Feststellbremseinheit (EPH) in die Anhängersteuereinheit (TCV) zu integrieren. Dies ermögliche eine besonders einfache Integration der elektropneumatischen Komponenten in das Fahrzeug. Entsprechendes solle gelten, wenn die Steuereinrichtung zumindest teilweise in einer solchen Anhängereinrichtung integriert sei.

Auf ähnliche Weise schlägt auch DE 10 2008 014 458 A1 der hiesigen Anmelderin eine elektropneumatische Einrichtung vor, insbesondere eine Luftaufbereitungseinrichtung, einen Achsmodulator, ein Anhängersteuerventil, eine Steuereinrichtung eines elektronischen Bremssystems oder eine Fahrdynamikregelungseinrichtung, und/oder eine elektropneumatische Einrichtung des Fahrzeugs, insbesondere eine Luftaufbereitungseinrichtung oder eine Luftfederungseinrichtung mit einer darin integrierten Feststellbremsfunktion.

Eine praktische Ausführung für die "skandinavische Anhängersteuerung" ist in DE 10 2015 112 490 A1 offenbart. Dort ist ein elektropneumatisches Steuermodul nach dem Oberbegriff des Anspruchs 1 offenbart. Das elektropneumatische Steuermodul weist eine gemeinsame Steuereinheit (ECU) sowohl für eine Feststellbremseinheit (EPH) als auch für eine Anhängersteuereinheit (TCV) auf. Konkret ist in DE 10 2015 112 490 A1 eine elektropneumatische Steuereinrichtung einer elektropneumatischen Bremsanlage einer Zugfahrzeug-Anhänger-Kombination wenigstens zum Steuern des Feststellbremsens der Zugfahrzeug-Anhänger-Kombination und des Hilfsbremsens der Zugfahrzeug-Anhänger-Kombination sowie des Betriebsbremsens wenigstens des Anhängers offenbart, mit wenigstens einem Gehäuse, in oder an welchem Folgendes angeordnet ist: a) ein pneumatischer Steuereingangsanschluss für eine zu einem pneumatischen Kanal einer Betriebsbremsbetätigungseinrichtung des Zugfahrzeugs führenden Steuerleitung, b) ein pneumatischer Versorgungsanschluss für eine zu wenigstens einem Druckluftvorrat des Zugfahrzeugs führende Versorgungsleitung, c) ein pneumatischer Steuerausgangsanschluss für eine zu einem Kupplungskopf "Bremse" des Zugfahrzeugs führende Betriebsleitung, d) ein pneumatischer Versorgungsausgangsanschluss für eine zu einem Kupplungskopf "Vorrat" des Zugfahrzeugs führende Versorgungsleitung, e) ein Feststellbremsausgangsanschluss für eine zu einem Federspeicherbremszylinder des Zugfahrzeugs führende Bremsleitung, f) ein elektrischer Feststellbremssteueranschluss für eine zu einer elektrischen Feststellbremsbetätigungseinrichtung führende Steuerleitung, g) ein elektrischer Betriebsbremssteueranschluss für eine zu einem elektrischen Kanal der Betriebsbremsbetätigungseinrichtung führende Signalleitung, h) ein erstes Relaisventil mit einem Steuereingang, einem ersten Arbeitsausgang und einem Versorgungseingang, wobei der erste Arbeitsausgang mit dem Feststellbremsausgangsanschluss und der Versorgungseingang mit dem Versorgungseingangsanschluss verbunden ist, i) ein elektronisches Steuergerät, j) eine von dem elektronischen Steuergerät gesteuerte erste elektromagnetische Einlass-/Auslass-Ventilkombination, welche den Steuereingang des ersten Relaisventils sperrt, mit einer Druckluftsenke oder mit dem pneumatischen Versorgungsanschluss verbindet, k) ein zweites Relaisventil mit einem pneumatischen Versorgungseingang, welcher mit dem Versorgungseingangsanschluss verbunden ist, einem pneumatischen Versorgungsausgang, welcher mit dem Versorgungsausgangsanschluss verbunden ist, einem zweiten Arbeitsausgang, welcher mit dem Steuerausgangsanschluss verbunden ist und mit einem ersten pneumatischen Steuereingang und einem zweiten pneumatischen Steuereingang, I) eine von dem elektronischen Steuergerät gesteuerte elektromagnetische Ventileinrichtung mit einer zweiten elektromagnetischen Einlass-/Auslass-Ventilkombination und einem elektromagnetischen Backup-Ventil, wobei das Backup-Ventil im entstromten Zustand den Steuereingangsanschluss mit dem ersten pneumatischen Steuereingang des zweiten Relaisventils verbindet und bestromt diese Verbindung sperrt und wobei die zweite elektromagnetische Einlass-/Auslass-Ventilkombination einen zweiten pneumatischen Steuereingang des zweiten Relaisventils sperrt, mit einer Druckluftsenke oder mit dem pneumatischen Versorgungseingangsanschluss verbindet, wobei m) das zweite Relaisventil zwei Steuerkolben umfasst, einen ersten Steuerkolben, welcher eine mit dem ersten pneumatischen Steuereingang in Verbindung stehende erste Steuerkammer begrenzt sowie einen zweiten Steuerkolben, welcher eine mit dem zweiten pneumatischen Steuereingang in Verbindung stehende zweite Steuerkammer begrenzt, wobei der erste Steuerkolben und der zweite Steuerkolben mit einem Doppelsitzventil zusammenwirken, welches ein Einlassventil sowie ein Auslassventil zur Be- oder Entlüftung des zweiten Arbeitsausgangs aufweist. Über eine elektromagnetische Ventileinrichtung können die beiden Steuerkolben des zweiten Relaisventils so gesteuert werden, dass einerseits mittels des ersten Steuerkolbens ein Betriebsbremsen des Anhängers sowie ein Hilfsbremsen ausgeführt wird, wenn die Federspeicher des Zugwagens zum Bremsen verwendet werden. Der zweite Steuerkolben wird für einen Redundanzfall eingesetzt, wenn der Fahrzeugführer manuell über ein Bremspedal einen Redundanzdruck aussteuert. Eine "europäische Anhängersteuerung" dergestalt, dass im unbestromten Zustand des Fahrzeugs bei entlüfteten Federspeichern der Anhänger über einen Bremsdruck mittels der Betriebsbremsen gebremst wird, ist bei der Konfiguration aus DE 10 2015 112 490 A1 nicht möglich und auch explizit nicht vorgesehen. Zudem ist die Konstruktion des Relaisventils mit zwei Steuerkolben in einem Relaisventil aufwendig.

Ferner ist aus DE 10 2012 000 435 A1 der hiesigen Anmelderin ein Feststellbremsmodul für eine "europäische Anhängersteuerung" bekannt. Das dort offenbarte Modul nutzt ein Relaisventil sowie ein erstes und ein zweites bistabiles Ventil, um den entsprechenden Bremsdruck für die Betriebsbremsen des Anhängers auch im stromlosen Zustand bei entlüfteten Federspeichern aussteuern zu können.

Weiterhin ist aus DE 10 2004 051 309 B4 eine aus Modulen mit elektrischen und/oder pneumatischen Komponenten aufgebaute elektropneumatische Zentraleinheit des Nutzfahrzeugs offenbart. Die Zentraleinheit kann aus einzelnen Modulen zusammengesteckt werden, um entsprechende Funktionalitäten zu erreichen. Die einzelnen Module weisen elektrische und pneumatische Anschlüsse auf, die miteinander korrespondieren.

DE 10 2007 047 691 A1 offenbart einen Feststellbremsmodulator, mittels dessen Betriebsbremsen des Anhängers in Übereinstimmung mit Federspeichern des Zugwagens angesteuert werden können. Der Feststellbremsmodulator weist ein Zugwagenschutzventil auf, das so ausgebildet ist, dass bei einem Druckabfall des Vorratsdrucks für den Anhänger auch die Steuerdruckleitung gesperrt wird.

Es ist daher eine Aufgabe der vorliegenden Erfindung, ein elektropneumatisches Steuermodul der eingangs genannten Art anzugeben, welches gegenüber dem Stand der Technik vereinfacht ist, weniger fehleranfällig, aber dennoch wenigstens dieselben Funktionalitäten ausführen kann. Dabei ist insbesondere Ziel der Erfindung, ein elektropneumatisches Steuermodul für eine "skandinavische Anhängersteuerung" anzugeben.

Die Aufgabe wird bei einem elektropneumatischen Steuermodul der eingangs genannten Art dadurch gelöst, dass das erste Relaisventil einen einzigen Relaisventil-Steuereingang aufweist, der in eine gemeinsame Steuerkammer mündet, wobei der Relaisventil-Steuereingang mittels der Anhängersteuer-Ventileinheit mit dem Vorratseingang und/oder mit einer Entlüftung verbindbar ist, um einen Betriebsbrems-Steuerdruck in der gemeinsamen Steuerkammer auszusteuern, und wobei im Falle eines Fehlers des elektropneumatisches Steuermodul ein Redundanzdruck in die gemeinsame Steuerkammer aussteuerbar ist, um einen Bremsdruck an dem Anhängerbremsdruckanschluss auszusteuern.

Die Erfindung hat erkannt, dass es zum Erreichen der "skandinavischen Anhängersteuerung" nicht erforderlich ist, ein komplexes inverses Relaisventil oder ein komplexes Relaisventil mit zwei Steuerkolben und zwei Steuerkammern zu verwenden. Vielmehr ist es ausreichend, auch bei einem integrierten elektropneumatischen Steuermodul, welches eine Feststellbremseinheit und eine Anhängersteuereinheit in einem Gerät integriert mit einer gemeinsamen elektronischen Steuereinheit, ein einfaches Relaisventil mit einer gemeinsamen Steuerkammer für den Betriebsbrems-Steuerdruck und den Redundanzdruck zu verwenden. Beide Drücke werden in dieselbe Steuerkammer ausgesteuert. Hierdurch ist die Konstruktion wesentlich vereinfacht, da einerseits weniger Bauteile verwendet werden, andererseits auch das Zusammenspiel von mehreren Kolben nicht notwendig ist. Ferner ist der Bauraum reduziert und aufgrund der reduzierten Komplexität auch die Fehleranfälligkeit geringer. Bevorzugt weist das erste Relaisventil eine einzige Steuerkammer auf.

Der Betriebsbrems-Steuerdruck ist dabei derjenige Druck, der im normalen Fahrbetrieb automatisch ausgesteuert wird, um einen entsprechenden Anhängerbremsdruck zu bewirken. Der Redundanzdruck wird vorzugsweise im Fehlerfall ausgesteuert, beispielswiese mit Hilfe eines (elektro-)pneumatischen Bremswertgebers (Bremspedal). Der Redundanzdruck kann aber auch von einem anderen Steuermodul bereitgestellt werden. Erfindungsgemäß wird auch dieser Druck in die gemeinsame Steuerkammer ausgesteuert um die Aussteuerung eines entsprechenden Anhängerbremsdrucks zu bewirken.

Das elektropneumatische Steuermodul der vorliegenden Erfindung ist insbesondere für einen Fahrzeugzug mit einem Nutzfahrzeug vorgesehen. Der Anhängerversorgungsdruckanschluss dient dazu, mit einem Anschluss "Vorrat", auch bekannt als "roter Kupplungskopf", des Zugfahrzeugs verbunden zu werden. Entsprechend ist der Anhängerbremsdruckanschluss dazu vorgesehen, mit einem Anschluss "Bremse", auch bekannt als "gelber Kupplungskopf", des Zugfahrzeugs verbunden zu werden.

Gemäß einer bevorzugten Ausführungsform weist das erste Relaisventil einen einzigen Steuerkolben auf. Die gemeinsame Steuerkammer ist folglich durch den einzigen Steuerkolben definiert und bei Aussteuerung eines Drucks in die gemeinsame Steuerkammer wird der einzige Steuerkolben bewegt. Die Konstruktion eines solchen Relaisventils ist also denkbar einfach und führt zu einem einfachen elektropneumatischen Steuermodul, das wenig fehleranfällig und kostengünstig herstellbar ist.

Vorzugsweise weist dieser einzige Steuerkolben des ersten Relaisventils eine einzige Steuerfläche auf. Das erste Relaisventil weist einen einzigen Relaisventil-Steuereingang auf. Es ist denkbar und bevorzugt, dass eine oder mehrere pneumatische Leitungen mit diesem Relaisventil-Steuereingang verbunden sind, sodass es möglich ist, über ein oder mehrere pneumatische Ventile einen oder mehrere unterschiedliche Drücke an dem einzigen Relaisventil-Steuereingang auszusteuern. Durch das Vorsehen eines einzigen Relaisventil-Steuereingangs ist die Bauweise vereinfacht und die Fehleranfälligkeit reduziert. Leckage wird weitgehend vermieden und Verbindungsstellen reduziert.

In einer weiteren bevorzugten Ausgestaltung der Erfindung weist die Anhängersteuer-Ventileinheit ein elektronisch schaltbares Einlassventil mit wenigstens einem ersten und einem zweiten Einlassventil-Anschluss auf, wobei der erste Einlassventil-Anschluss mit dem Vorratseingang und der zweite Einlassventil-Anschluss mit der Steuerkammer des ersten Relaisventils verbunden ist, um die Steuerkammer mittels Schalten des Einlassventils zu belüften. Vorzugsweise ist das Einlassventil als 2/2-Wegeventil ausgebildet. Alternativ ist das Einlassventil mit wenigstens einem weiteren Schaltventil integriert und beispielsweise als 3/2-Wegeventil ausgebildet.

In einer weiteren bevorzugten Ausführungsform weist das elektropneumatische Steuermodul einen Redundanzdruckanschluss mit einer ersten Redundanzdruckleitung zum Anschluss eines Bremswertgebers oder des Brems- oder Steuerdrucks einer der anderen Fahrzeugachsen, über den z.B. durch Betätigung eines Bremspedals ein pneumatischer Bremsdruck am Anhängerbremsdruckanschluss aussteuerbar ist. Der Bremswertgeber kann rein pneumatisch, elektropneumatisch oder auf sonstige Weise ausgebildet sein. Der Redundanzdruckanschluss dient dazu, eine Fahrzeug-Soll-Verzögerung eines Fahrzeugführers zu empfangen, die dieser mittels des Bremswertgebers manuell einsteuert. Der Fahrzeugführer kann so in einem Fehlerfall, z.B. bei Ausfall der Versorgungsspannung rein pneumatisch einen Bremsdruck aussteuern. Alternativ wird an dem Redundanzanschluss ein Brems - oder Steuerdruck einer anderen Fahrzeugachse, z.B. der Vorderachse, ausgesteuert. Hierdurch kann dann im Fehlerfall der Anhängerwagen in Übereinstimmung mit der anderen Achse gebremst werden.

In einer bevorzugten Ausgestaltung weist die Anhängersteuer-Ventileinheit ein elektronisch schaltbares Redundanzventil mit wenigstens einem ersten und einem zweiten Redundanzventil-Anschluss auf, wobei der erste Redundanzventil-Anschluss mit dem Redundanzdruckanschluss, und der zweite Redundanzventil-Anschluss über eine zweite Redundanzdruckleitung mit der Steuerkammer des ersten Relaisventils verbunden ist, um in der Steuerkammer mittels Schalten des Redundanzventils einen Redundanzdruck auszusteuern. Der erste Redundanzventil-Anschluss ist vorzugsweise über die erste Redundanzdruckleitung mit dem Redundanzdruckanschluss verbunden. Vorzugsweise ist das Redundanzventil als 2/2-Wegeventil ausgebildet. Alternativ ist es mit wenigstens einem weiteren Ventil, wie insbesondere dem Einlassventil, integriert und gemeinsam als 3/2-Wegeventil ausgebildet. Das Redundanzventil kann auch als eine Art Eingangsventil bezeichnet werden, da es den Druckeingang vom Bremswertgeber über den Redundanzdruckanschluss freigibt oder sperrt.

In einer weiteren bevorzugten Ausführungsform weist die Anhängersteuer-Ventileinheit ein elektronisch schaltbares Auslassventil mit wenigstens einem ersten und einem zweiten Auslassventil-Anschluss auf, wobei der erste Auslassventil-Anschluss mit der Steuerkammer des ersten Relaisventils, und der zweite Auslassventil-Anschluss mit einer Drucksenke verbunden ist, um die Steuerkammer mittels Schalten des Auslassventils zu entlüften. Vorzugsweise ist das Auslassventil als 2/2-Wegeventil ausgebildet. Alternativ ist es mit wenigstens einen weiteren Ventil, insbesondere dem Einlassventil, integriert und als 3/2-Wegeventil ausgebildet. Wurde an dem Relaisventil-Ausgang ein Bremsdruck ausgesteuert, und soll dieser reduziert werden, kann über das Auslassventil die Steuerkammer entlüftet werden, indem das Auslassventil von einer ersten geschlossenen Schaltstellung in eine zweite geöffnete Schaltstellung verbracht wird.

In einer weiteren bevorzugten Ausführungsform ist das Redundanzventil als 3/2-Wegeventil ausgebildet und weist einen dritten Redundanzventil-Anschluss auf, wobei der dritte Redundanzventil-Anschluss an eine Drucksenke angeschlossen ist. In diesem Fall kann ein Auslassventil entfallen. Das Redundanzventil und das Auslassventil sind in diesem Fall integriert und das Redundanzventil dient nicht nur zur Aussteuerung eines Redundanzdrucks an dem Relaisventil-Steuereingang, sondern auch zum Entlüften der Steuerkammer, für den Fall, dass der an dem Relaisventil-Ausgang ausgesteuerte Bremsdruck reduziert werden soll. Dies ist zweckmäßig, denn im Normalbetrieb wird üblicherweise kein Redundanzdruck ausgesteuert, sondern die Bremsen werden durch die Steuereinheit oder eine übergeordnete Steuereinheit, beispielsweise ein Zentralmodul, elektronisch angesteuert. Ferner können Auslassventil und Redundanzventil integriert werden, da für den Fall, dass ein Redundanzdruck ausgesteuert werden soll, das Auslassventil jedenfalls geschlossen sein muss. Hierdurch kann weiter Bauraum reduziert werden und Bauteile können eingespart werden.

Gemäß einer weiteren bevorzugten Ausführungsform ist die zweite Redundanzdruckleitung mit dem ersten Einlassventil-Anschluss verbunden, sodass in einer ersten Schaltstellung des Redundanzventils bei geöffnetem Einlassventil ein Redundanzdruck von dem Redundanzdruckanschluss über das Redundanzventil und das Einlassventil in die Steuerkammer aussteuerbar ist, und in einer zweiten Schaltstellung des Redundanzventils ein Steuerdruck von dem Vorratseingang über das Redundanzventil und das Einlassventil in die Steuerkammer aussteuerbar ist. Das Redundanzventil ist in diesem Fall vorzugsweise als 3/2-Wegeventil ausgebildet, während das Einlassventil als 2/2-Wegeventil ausgebildet ist. Das Redundanzventil ist dem Einlassventil vorzugsweise vorgeschaltet und der erste Redundanzventil-Anschluss ist mit der ersten Redundanzdruckleitung verbunden, der zweite Redundanzventil-Anschluss mit der zweiten Redundanzdruckleitung, welche ihrerseits mit dem ersten Einlassventil-Anschluss verbunden ist. Der dritte Redundanzventil-Anschluss ist mit dem Vorratseingang verbunden. Das Redundanzventil kann in dieser Ausführungsform zwischen Redundanzdruck und Vorratsdruck hin- und herschalten und das Einlassventil kann dazu eingesetzt werden, den vom Redundanzventil ausgesteuerten Druck jeweils zu sperren, oder an den Relaisventil-Steuereingang weiterzuleiten. Hierdurch wird ein Übersteuern, bzw. Überbremsen vermieden, da immer nur entweder der Redundanzdruck oder der Vorratsdruck an dem Einlassventil, genauer gesagt im ersten Einlassventil-Anschluss, anliegen kann.

Gemäß einer weiteren bevorzugten Ausführungsform ist die elektronische Steuereinheit ECU dazu eingerichtet, (1.) die Feststellbrems-Ventileinheit basierend auf einem ersten elektronischen Hilfsbremssignal zu veranlassen, wenigstens ein Ventil der Feststellbrems-Ventileinheit so zu schalten, dass an dem Federspeicher-Anschluss ein Arbeitsdruck zum temporären und gestuften Entlüften des wenigstens einen Federspeichers ausgesteuert wird; und (2.) die Anhängersteuer-Ventileinheit basierend auf dem ersten elektronischen Hilfsbremssignal oder einem zweiten Hilfsbremssignal zu veranlassen, wenigstens ein Ventil, vorzugsweise das Einlassventil und/oder das Redundanzventil der Anhängersteuer-Ventileinheit so zu schalten, dass an dem Anhängerbremsdruckanschluss ein Bremsdruck ausgesteuert wird. Sollen die Federspeicher, die primär als Feststellbremsen bzw. Parkbremsen eingesetzt werden, auch zum Hilfsbremsen unter der Fahrt verwendet werden, werden von der elektronischen Steuereinheit basierend auf einem empfangenen oder ermittelten ersten elektronischen Hilfsbremssignal ein oder mehrere Ventile der Feststellbrems-Ventileinheit so geschaltet, dass die Federspeicher entsprechend teilweise entlüftet und/oder belüftet werden. Um in diesem Fall auch die Betriebsbremsen des Anhängerwagens zu betätigen, ist die elektronische Steuereinheit vorzugsweise ebenfalls dazu eingerichtet, basierend auf dem ersten elektronischen Hilfsbremssignal oder einem zweiten Hilfsbremssignal, falls ein zweites Hilfsbremssignal, das für Anhängerwagen vorgesehen ist, empfangen oder ermittelt wird, zu veranlassen, wenigstens ein Ventil der Anhängersteuer-Ventileinheit so zu schalten, dass an dem Anhängerbremsdruckanschluss ein Bremsdruck ausgesteuert wird. Der an dem Anhängerbremsdruckanschluss ausgesteuerte Bremsdruck ist vorzugsweise äquivalent zu der Be- bzw. Entlüftung der Federspeicher, sodass der Zugwagen und der Anhängerwagen übereinstimmend gebremst werden. In dieser Variante ist eine Hilfsbremsfunktionalität implementiert, wodurch der Fahrzeugzug sicherer ist.

Als Hilfsbremsfunktionalität oder Hilfsbremsmodus wird das Aussteuern eines Bremsdrucks in Fahrsituationen bezeichnet, bei denen die Feststellbremse (teilweise) eingelegt werden soll und sich das Fahrzeug nicht im Stillstand befindet. Das heißt, eine Hilfsbremsfunktion umfasst im vorliegenden Fall nicht nur den Fall des Versagens des Betriebsbremssystems, sondern auch wenn die Feststellbremsen, aus welchen Gründen auch immer, zusätzlich oder alternativ zu den Betriebsbremsen verwendet werden.

Das erste elektronische Hilfsbremssignal und vorzugsweise das zweite elektronische Hilfsbremssignal, für den Fall, dass es ein zweites elektronisches Hilfsbremssignal gibt, wird vorzugsweise entweder von einem Bedienelement (etwa. Handbremsschalter), von einer Zentraleinheit oder einer übergeordneten Steuereinheit (etwa einer Steuereinheit für autonomes Fahren) bereitgestellt. Beispielsweise wird dieses erste elektronische Hilfsbremssignal über einen CAN-Bus oder LIN-Bus übermittelt.

In einer weiteren bevorzugten Ausführungsform sind die elektronische Steuereinheit, die Anhängersteuereinheit und die Feststellbremseinheit in einem Modul integriert. Als in einem Modul integriert in diesem Sinne wird auch verstanden, wenn die einzelnen Komponenten, also die elektronische Steuereinheit, die Anhängersteuereinheit und/oder die Feststellbremseinheit als Sub-Module ausgebildet sind, die aneinander angeflanscht sind. Vorzugsweise sind diese Komponenten, nämlich mindestens die elektronische Steuereinheit, die Anhängersteuereinheit und die Feststellbremseinheit, in einem gemeinsamen Gehäuse angeordnet. Hierdurch wird insbesondere die Montage und auch der nachträgliche Einbau des elektropneumatischen Steuermoduls gemäß der Erfindung wesentlich vereinfacht. Die Steuereinheit dient dazu, sowohl die Anhängersteuereinheit als auch die Feststellbremseinheit zu steuern und ist lokal mit diesen in einem Gehäuse integriert. Hierzu ist es dann nur erforderlich, anstelle von separaten analogen Vorsteuerleitungen, die direkt von dem Zentralmodul zu der Anhängersteuer-Ventileinheit führen, einen elektrischen Anschluss, beispielsweise einen CAN-Bus-Anschluss, an dem Gehäuse vorzusehen, sowie die entsprechenden pneumatischen Anschlüsse. Hierdurch ist auch die Fehleranfälligkeit wesentlich verringert, da externe Schnittstellen verringert sind.

Ein inverses Relaisventil ist in dem elektropneumatischen Steuermodul vorzugsweise nicht vorgesehen, sondern ein "normales" Relaisventil. Dadurch kann auch ein weiteres Sperrventil entfallen, das sonst im Falle des Parkens verhindert, dass an dem Anhängerbremsdruckanschluss ein Bremsdruck ausgesteuert wird ("skandinavische Anhängersteuerung"). Durch den Entfall des inversen Relaisventils wird der Bauraum des elektropneumatischen Steuermoduls insgesamt verringert, und auch die Komplexität des Relaisventils nimmt ab, wodurch Kosten reduziert werden und auch die Fehleranfälligkeit geringer ist. Darüber hinaus kann ein weiteres elektropneumatisches Ventil in der Feststellbremseinheit (EPH) entfallen, das im Stand der Technik für die "Anhängerkontrollstellung" verwendet wurde.

In einer weiteren bevorzugten Ausführungsform weist das elektropneumatische Steuermodul einen Anschluss zum Empfang eines redundanten elektronischen Bremsrepräsentationssignals auf, wobei das elektropneumatische Steuermodul dazu eingerichtet ist, in Abhängigkeit des empfangenen redundanten elektronischen Bremsrepräsentationssignals wenigstens ein Ventil der Anhängersteuer-Ventileinheit so zu schalten, dass ein entsprechender Bremsdruck an dem Anhängerbremsdruckanschluss ausgesteuert wird. Das Bremsrepräsentationssignals kann ein Bremssignal umfassen oder als ein solches ausgebildet sein. Es kann aber auch ein Signal sein, das nur ein Bremssignal repräsentiert, beispielsweise ein Signal eines Sensors, der ein Bremsen einer weiteren Betriebs- oder Feststellbremse erfasst. Ein solches Signal ist nicht direkt ein Bremssignal, repräsentiert aber ein solches und kann als abgeleitetes Signal aufgefasst werden.

Das redundante elektronische Bremsrepräsentationssignals wird beispielsweise von einem manuell betätigten Bremswertgeber und/oder einem Handbremsschalter bereitgestellt. Im üblichen Betrieb wird ein elektronisches Bremssignal (als Bremsrepräsentationssignals) von einem weiteren Steuergerät, zum Beispiel einem Zentralmodul, bereitgestellt. Für den Fall, dass dieses weitere Steuergerät ausfällt, ist das elektropneumatische Steuermodul gemäß dieser Ausführungsform dazu eingerichtet, ein redundantes elektronisches Bremsrepräsentationssignals zu empfangen und dieses zu verwenden. Der Bremswertgeber kann beispielsweise als Bremspedal ausgebildet sein, das elektromechanisch arbeitet und bei dem ein Weggeber aufgrund des Pedalwegs ein entsprechendes elektrisches Signal bereitstellt.

Vorzugsweise repräsentiert das Bremsrepräsentationssignal die Betätigung einer Feststellbremse des Zugwagens. Beispielsweise ist das Bremsrepräsentationssignal in diesem Fall als Signal eines elektrischen Handbremsschalters ausgebildet oder als ein Signal eines Sensors, der das Betätigen einer Feststellbremse, insbesondere Federspeicher, des Zugwagens erfasst.

Hierbei ist vorzugsweise vorgesehen, dass das elektropneumatische Steuermodul einen redundanten Drucksensor aufweist, der an der ersten Redundanzdruckleitung oder dem Redundanzdruckanschluss angeordnet ist und dazu ausgebildet ist, den pneumatischen Redundanzdruck an dem Redundanzdruckanschluss oder in der ersten Redundanzdruckleitung zu erfassen und ein entsprechendes Redundanzdrucksignal als das Bremsrepräsentationssignal an der Steuereinheit bereitzustellen. Das von dem redundanten Drucksensor bereitgestellte Redundanzdrucksignal repräsentiert einen Fahrerwunsch, da der Drucksensor den manuell mittels des Bremswertgebers ausgesteuerten Redundanzdruck direkt oder indirekt erfasst. Die Steuereinheit ist vorzugsweise dazu eingerichtet das Bremsrepräsentationssignal, das sie vom Drucksensor empfängt, mit einem Betriebs-Bremssignal zu vergleichen, das die von dem Zentralmodul oder einer weiteren Steuereinheit empfängt. Für den Fall, dass das Bremsrepräsentationssignal eine höhere Verzögerungsanforderung repräsentiert als das von dem Zentralmodul empfangene Betriebs-Bremssignal, veranlasst die Steuereinheit das Schalten wenigstens eines Ventils der Anhängersteuer-Ventileinheit, um basierend auf dem Redundanzdruck die Aussteuerung eines Bremsdrucks am Anhängerbremsdruckanschluss zu ermöglichen. Mit anderen Worten, für den Fall, dass der Fahrer eine stärkere Verzögerung fordert als das Zentralmodul bzw. der weiteren Steuereinheit, wird das Zentralmodul bzw. die weitere Steuereinheit ausgesperrt und der Fahrer übernimmt manuell.

Vorzugsweise bildet das Redundanzdrucksignal das Bremsrepräsentationssignal. Hierdurch ist eine besonders einfache Konstruktion erreicht und die Steuereinheit empfängt das Redundanzdrucksignal als Bremsrepräsentationssignal und ist in der Lage, daraufhin ein oder mehrere Ventile so zu schalten, dass an dem Anhängerbremsdruckanschluss ein entsprechender Bremsdruck ausgesteuert wird.

Gemäß einem zweiten Aspekt der Erfindung wird die eingangs genannte Aufgabe durch einen Zugwagen gelöst, der ein elektropneumatisches Steuermodul nach einer der vorstehend beschriebenen bevorzugten Ausführungsformen eines elektropneumatischen Steuermoduls gemäß dem ersten Aspekt der Erfindung aufweist. Bezüglich der Ausgestaltungen der Ausführungsbeispiele sowie deren Vorteile wird vollumfänglich auf die obige Beschreibung Bezug genommen.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Nachstehend wird die Erfindung anhand von zwei Ausführungsbeispielen unter Bezugnahme auf die beiliegenden Figuren näher erläutert werden. Dabei zeigen:
- Fig. 1: ein schematisches Gesamtlayout eines Bremssystems für einen Fahrzeugzug mit einem erfindungsgemäßen elektropneumatischen Steuermodul;
- Fig. 2: eine schematische Darstellung des elektropneumatischen Steuermoduls mit integrierter Feststellbremseinheit, Anhängersteuereinheit und elektronischer Steuereinheit als Blockschaltbild;
- Fig. 3: ein erstes Ausführungsbeispiel eines elektropneumatischen Steuermoduls gemäß der Erfindung;
- Fig. 4: ein zweites Ausführungsbeispiel eines elektropneumatischen Steuermoduls gemäß der Erfindung
- Fig. 5: eine Darstellung des ersten Relaisventils im Detail;
- Fig. 6: ein drittes Ausführungsbeispiel eines elektropneumatischen Steuermoduls gemäß der Erfindung;
- Fig. 7: ein viertes Ausführungsbeispiel eines elektropneumatischen Steuermoduls gemäß der Erfindung; und
- Fig. 8: ein schematisches Gesamtlayout eines Bremssystems für einen Fahrzeugzug mit einem erfindungsgemäßen elektropneumatischen Steuermodul gemäß einem fünften Ausführungsbeispiel.

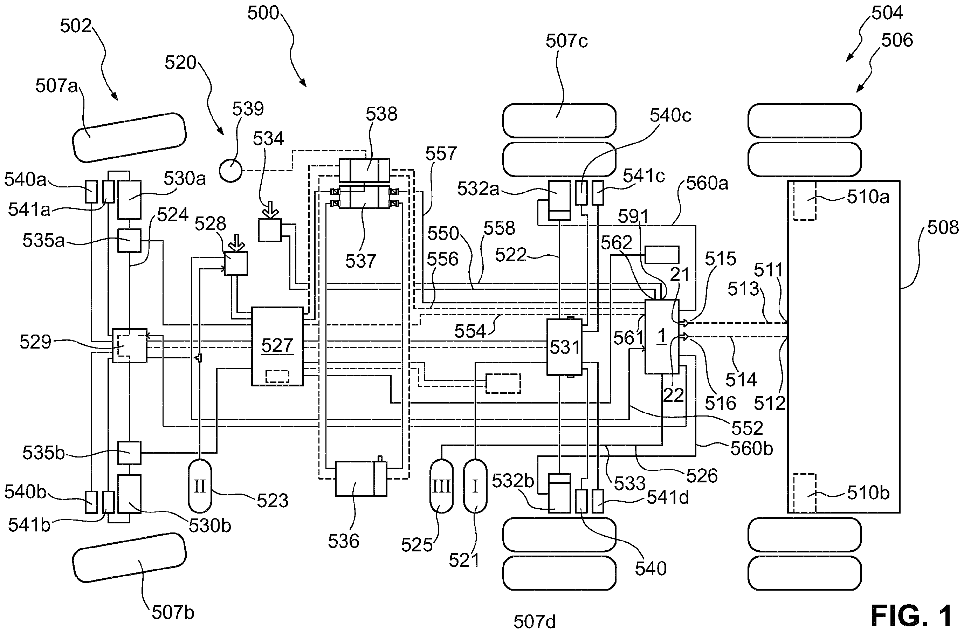

Fig. 1 illustriert zunächst den Gesamtaufbau anhand eines Fahrzeugzugs 500, der einen Zugwagen 502 und einen Anhängerwagen 504 umfasst. Der Anhängerwagen 504 ist hier nur schematisch gezeigt, nämlich nur eine Achse 506 des Anhängerwagens 504. Der Anhängerwagen 504 weist ein nur schematisch dargestelltes Anhänger-Betriebsbremssystem 508 auf, das über entsprechende Anschlüsse 511, 512 und pneumatische Leitungen 513, 514 mit entsprechenden Anschlüssen 515, 516 an dem Zugwagen 502 verbindbar ist. Über den Anschluss 515 ist der Anhängerwagen 504 mit einem Vorrat 525 verbindbar, und über den Anschluss 516 wird ein Bremsdruck weitergegeben. Das Anhänger-Betriebsbremssystem 508 weist schematisch dargestellte Betriebsbremsen 510a, 510b auf.

Der Zugwagen 502 weist ein Bremssystem 520 auf, welches einen ersten Vorrat 521 für einen Hinterachsbremskreislauf 522, einen zweiten Vorrat 523 für einen Vorderachsbremskreislauf 524 und einen dritten Vorrat 525 für einen Anhängerbremskreislauf 533 und einen Feststellbremskreislauf beinhaltet.

Als zentrale und übergeordnete Steuereinheit ist ein Zentralmodul 527 vorgesehen, welches rein elektrisch arbeitet. Es ist mit einem elektropneumatischen Bremswertgeber 528 verbunden und steuert das Betriebsbremsen während der Fahrt. Dazu ist das Zentralmodul 527 mit einem Vorderachsmodulator 529, der die Bremskraft in zwei vorderen Betriebsbremsen 530a, 530b steuert, und einem Hinterachsmodulator 531 verbunden, der die Bremskraft in zwei Betriebsbremsen 532a, 532b der Hinterachse steuert. Die Betriebsbremsen 532a, 532b sind hier als sogenannte Tristop-Bremsen ausgebildet und umfassen sowohl übliche hydraulische Bremszylinder als Betriebsbremsen als auch integrierte Federspeicher-Feststellbremsen, wie sie im Folgenden weiter unten genauer beschrieben werden.

Das Bremssystem 520 umfasst in diesem Ausführungsbeispiel auch ein elektropneumatisches Steuermodul 1 gemäß der Erfindung. Zur Ansteuerung einer Feststellbremse in den Betriebsbremsen 532a, 532b weist das Bremssystem 520 ferner einen elektrischen Handbremsschalter 534 auf. In Ausführungsbeispielen, die noch genauer erläutert werden, ist der elektrische Handbremsschalter 534 elektrisch mit dem elektropneumatischen Steuermodul 1 gekoppelt (wie in Fig. 1 gezeigt).

Die weiteren in Fig. 1 gezeigten Elemente sind in diesem Ausführungsbeispiel rein illustrativer Natur und umfassen beispielsweise ABS-Module 535a, 535b, eine Steuereinheit 536 für autonomes Fahren, eine Energiequelle 537 für elektrische Energie, eine SAE-Einheit 538, Lenkwinkel-Sensoren 539, sowie Sensoren 540a, 540b, 540c, 540d für die Bremsbelagverschleißsensierung und Sensoren 541a, 541b, 541c, 541d für die Drehzahl der entsprechenden Räder 507a, 507b, 507c, 507d.

Wie in Fig. 1 zu sehen ist, ist das elektropneumatische Steuermodul 1 über eine Signalleitung 550 mit dem elektrischen Handbremsschalter (HCU) 534 verbunden, über eine Redundanzdruckzufuhrleitung 552 mit dem Bremswertgeber 528, über einen ersten direkten CAN-Bus 554 mit dem Zentralmodul 527, über einen zweiten indirekten CAN-Bus 556 mit der SAE-Einheit 538 also dem Fahrzeugbus (und über diesen wiederum mit dem Zentralmodul 527), über eine Spannungsversorgung 557 mit der Energiequelle 537, über eine Spannungsversorgung558 mit dem Handbremsschalter 534, und über pneumatische Leitungen 560a, 560b mit den Federspeichern der (Tristop)-Betriebsbremsen 532a, 532b verbunden. Zum Steuern des Anhängerwagens 504 ist das elektropneumatische Steuermodul 1 über einen Anhängerversorgungsdruckanschluss 21 mit dem Anschluss 515 verbunden, der auch als "roter Kupplungskopf" bezeichnet wird und über einen Anhängerbremsdruckanschluss 22 mit dem Anschluss 516, der auch als "gelber Kupplungskopf" bezeichnet wird. Die Anschlüsse und deren Funktion in Bezug auf das elektropneumatische Steuermodul 1 werden im Folgenden näher erläutert werden.

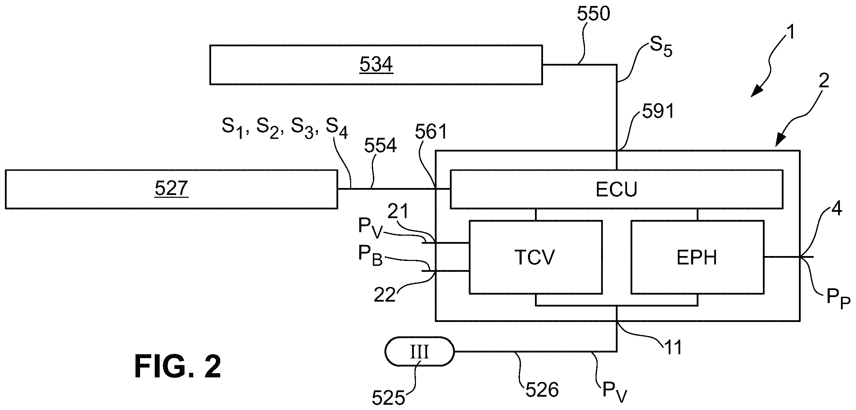

Das elektropneumatische Steuermodul 1 (vgl. Fig. 2) weist ein Gehäuse 2 auf, in dem die elektronische Steuereinheit ECU, die Anhängersteuereinheit TCV und die Feststellbremseinheit EPH integriert sind. Das elektropneumatische Steuermodul 1 ist wie in Fig. 1 bereits gezeigt, mit verschiedenen Anschlüssen versehen (wobei die Anschlüsse in Fig. 1 nicht separat bezeichnet sind) und weist einen Vorratseingang 11 auf, der über eine pneumatische Vorratszufuhrleitung 526 mit dem dritten Druckluftvorrat 525 verbunden ist.

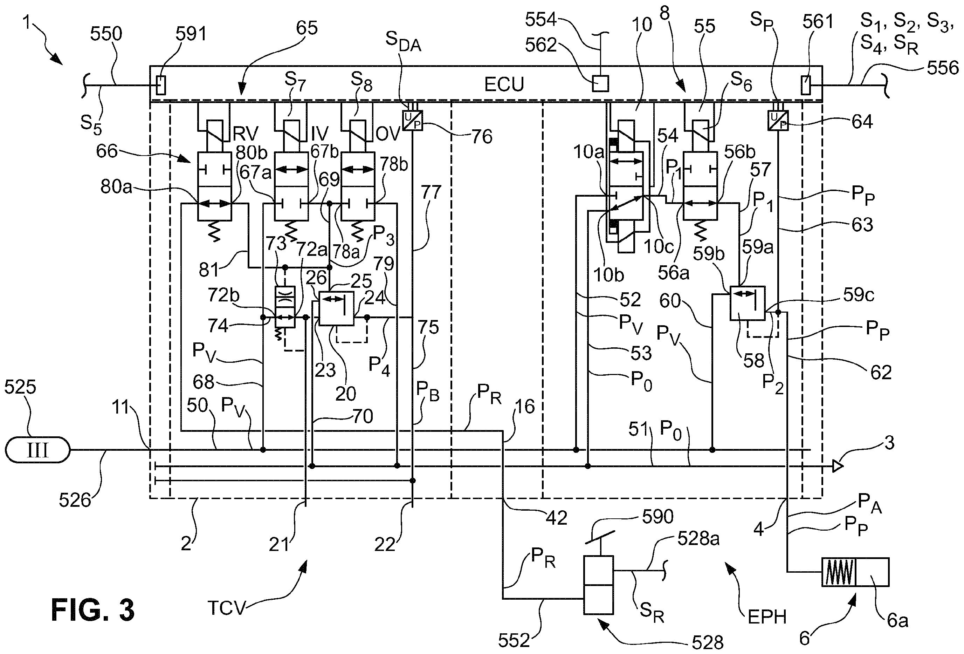

Weiterhin ist das elektropneumatische Steuermodul 1 mit einer übergeordneten Steuereinheit, hier dem Zentralmodul 527, über den ersten direkten CAN-Bus 554, verbunden. Dazu weist das elektropneumatische Steuermodul 1 einen CAN-Bus-Anschluss 561 auf. Von dem Zentralmodul 527 empfängt das elektropneumatische Steuermodul 1, und insbesondere die elektronische Steuereinheit ECU, Bremssignale insbesondere für die Betriebsbremsen 510a, 510b des Anhängerwagens 504, die das elektropneumatische Steuermodul 1 über die Anhängersteuereinheit TCV entsprechend an dem Anhängerversorgungsdruckanschluss 21 und dem Anhängerbremsdruckanschluss 22 pneumatisch aussteuert. Von dem Zentralmodul 527 kann das elektropneumatische Steuermodul 1 ferner Hilfsbremssignale S₁, S₂, und/oder Feststellbremssignale S₃, S₄ zum Betätigen der Federspeicher 6 (vgl. Fig. 3) erhalten, die in den Tristop-Betriebsbremsen 532a, 532b des Zugwagens 502 ausgebildet sind. Auch ist es denkbar, dass von dem Zentralmodul 527 ein Parkbremssignal über den CAN-Bus 554 bereitgestellt wird, und die elektronische Steuereinheit ECU entsprechend mittels der Feststellbremseinheit EPH an dem Federspeicheranschluss 4 einen entsprechenden Parkbremsdruck P_{P} aussteuert.

Das elektropneumatische Steuermodul 1 weist weiterhin einen Anschluss 591 für den elektrischen Handbremsschalter 534 auf. Der elektrische Handbremsschalter 534 ist über eine Signalleitung 550 mit dem elektrischen Anschluss 591 verbunden. Der elektrische Handbremsschalter 534 stellt ein elektrisches Handbremssignal S₅ an dem Anschluss 591 bereit. Basierend auf dem elektrischen Handbremssignal S₅ ist die elektronische Steuereinheit ECU dazu eingerichtet, die Feststellbremseinheit EPH so zu steuern, dass ein Parkbremsdruck P_{B} an dem Federspeicher-Anschluss 4 ausgesteuert wird.

Das elektropneumatische Steuermodul 1 weist auch einen zweiten Busanschluss 562 auf. Der zweite Busanschluss 562 ist über die zweite indirekte CAN-Busleitung 556 mit dem Fahrzeugbus 538 verbunden. Über den zweiten Busanschluss 562 kann die Steuereinheit ECU also auch Signale von der Steuereinheit 536 für autonomes Fahren empfangen.

Nachdem nun das grobe Layout des integrierten elektropneumatischen Steuermoduls 1 beschrieben wurde, zeigt Fig. 3 ein erstes konkretes Ausführungsbeispiel des elektropneumatischen Steuermoduls 1. Gleiche und ähnliche Elemente sind mit gleichen Bezugszeichen versehen, sodass vollumfänglich auf die obige Beschreibung zu den Figuren 1 und 2 Bezug genommen wird.

Das elektropneumatische Steuermodul 1 weist, wie bereits mit Bezug auf Figur 2 erläutert, eine Anhängersteuereinheit TCV und eine Feststellbremseinheit EPH auf. Beide sind in ein gemeinsames Gehäuse 2 integriert. In das Gehäuse 2 ist ferner eine elektronische Steuereinheit ECU integriert, die sowohl die Anhängersteuereinheit TCV als auch die Feststellbremseinheit EPH steuert. Die elektronische Steuereinheit ECU ist dafür vorgesehen, mit einer übergeordneten Steuerung, insbesondere dem Zentralmodul 527, verbunden zu sein, wie dies in Fig. 1 und 2 gezeigt ist.

Das Gehäuse 2 weist einen Vorratseingang 11 auf, der über eine pneumatische Vorratszufuhrleitung 526 mit dem dritten Druckluftvorrat 525 verbindbar ist. Im Inneren des Gehäuses 2 verläuft von dem Vorratseingang 11 eine Vorratsverteilleitung 50, über die verschiedene Elemente mit Vorratsdruck P_{V} versorgt werden. Ebenso verläuft im Inneren des Gehäuses 2 eine Entlüftungsverteilleitung 51, die zu einer Drucksenke 3 führt und über die verschiedene Elemente des elektropneumatischen Steuermoduls 1 entlüftet werden können.

Die Feststellbremseinheit EPH weist eine Feststellbrems-Ventileinheit 8 auf. Die Feststellbrems-Ventileinheit 8 weist ein Bistabilventil 10 auf. Das Bistabilventil 10 ist als 3/2-Wegeventil ausgebildet und weist einen ersten Bistabilventil-Anschluss 10a, einen zweiten Bistabilventil-Anschluss 10b und einen dritten Bistabilventil-Anschluss 10c auf. Der erste Bistabilventil-Anschluss 10a ist über eine erste Vorratsabzweigleitung 52 mit der Vorratsverteilleitung 50 verbunden. Der zweite Bistabilventil-Anschluss 10b ist über eine erste Entlüftungsabzweigleitung 53 mit der Drucksenke 3 verbunden, sodass in der Entlüftungsabzweigleitung 53 Umgebungsdruck P₀ anliegt. An den dritten Bistabilventil-Anschluss 10c ist eine erste Steuerleitung 54 angeschlossen. Das Bistabilventil 10 hat eine erste und eine zweite Schaltstellung, wobei in Fig. 3 die erste Schaltstellung dargestellt ist. In der ersten Schaltstellung ist der zweite Bistabilventil-Anschluss 10b mit dem dritten Bistabilventil-Anschluss 10c verbunden, sodass die erste Steuerleitung 54 mit der Drucksenke 3 verbunden und entlüftbar ist. In der zweiten, in Fig. 3 nicht gezeigten, Schaltstellung ist der erste Bistabilventil-Anschluss 10a mit der ersten Steuerleitung 54 verbunden, sodass der Vorratsdruck Pv in der Steuerleitung 54 aussteuerbar ist. Die erste Steuerleitung 54 ist weiterhin mit einem ersten Hilfsbremsventilanschluss 56a eines Hilfsbremsventils 55 der Feststellbrems-Ventileinheit 8 verbunden. Das Hilfsbremsventil 55 ist elektronisch schaltbar und mit der ECU verbunden. Es ist in diesem Ausführungsbeispiel als 2/2-Wegeventil ausgebildet und weist neben dem ersten Anschluss 56a einen zweiten Hilfsbremsventilanschluss 56b auf. Das Hilfsbremsventil 55 ist stromlos offen ausgebildet. In der in Fig. 3 gezeigten ersten Schaltstellung ist das Hilfsbremsventil 55 offen, und in der zweiten, in Fig. 3 nicht gezeigten Stellung ist das Hilfsbremsventil 55 geschlossen, sodass der erste Hilfsbremsventilanschluss 56a und der zweite Hilfsbremsventilanschluss 56b getrennt sind.

Weiterhin weist die Feststellbrems-Ventileinheit 8 gemäß der Erfindung ein EPH-Relaisventil 58 auf. Das zweite EPH-Relaisventil 58 weist einen EPH-Relaisventil-Steuereingang 59a, einen EPH-Relaisventil-Vorratsanschluss 59b und einen EPH-Relaisventil-Ausgang 59c auf. Der EPH-Relaisventil-Steuereingang 59a des EPH-Relaisventils 58 ist über eine zweite Steuerleitung 57 mit dem zweiten Hilfsbremsventilanschluss 56b verbunden. Der EPH-Relaisventil-Vorratsanschluss 59b des EPH-Relaisventils 58 ist über eine zweite Vorratsabzweigleitung 60 mit der Vorratsverteilleitung 50 verbunden, sodass an dem EPH-Relaisventil-Vorratsanschluss 59b des EPH-Relaisventils 58 der Vorratsdruck P_{V} anliegt. Der EPH-Relaisventil-Ausgang 59c des EPH-Relaisventils 58 ist über eine Federspeicherleitung 62 mit dem Federspeicheranschluss 4 verbunden.

Durch entsprechende Schaltung des Bistabilventils 10 und des Hilfsbremsventils 55 wird zunächst in der ersten und zweiten Steuerleitung 54, 57 ein erster Steuerdruck P₁ ausgesteuert, der bei vollständig geöffneten Ventilen 10, 55 dem Vorratsdruck P_{V} entspricht. Über das EPH-Relaisventil 58 wird dann basierend auf dem ersten Steuerdruck P₁ an dem EPH-Relaisventil-Ausgang 59c ein zweiter Steuerdruck P₂ ausgesteuert, der an dem Federspeicheranschluss 4 bereitgestellt wird, und somit einen Parkbremsdruck P_{P} bildet. Im normalen Fahrbetrieb ist der Zylinder 6a des Federspeichers 6 belüftet, sodass die Federspeicherbremsen gelöst sind. Es soll verstanden werden, dass an dem Federspeicheranschluss 4 mehr als ein Federspeicher 6 angeschlossen werden kann. Insbesondere können zwei Federspeicher 6 angeschlossen werden, wie dies auch in Fig. 1 in Bezug auf die Tristop-Bremsen 532a, 532b erläutert wurde. Selbstverständlich können auch vier oder mehr Federspeicher 6 angeschlossen werden. Die genaue Anzahl und Konfiguration ist abhängig von der Art des Zugwagens 502, in dem das Steuermodul 1 eingesetzt wird.

Das Hilfsbremsventil 55 wird zu Hilfsbremszwecken verwendet und erlaubt bei Schaltung des Bistabilventils 10 in die in Fig. 3 gezeigte Entlüftungsstellung, nämlich die erste Schaltstellung, ein gestuftes Be- und Entlüften, indem zunächst das Hilfsbremsventil 55 geschlossen ist und dann gepulst basierend auf einem Signal S₆ geöffnet wird, sodass der Federspeicher 6 teilweise be- und entlüftet werden kann.

Zu Regelungszwecken weist die Feststellbremseinheit EPH ferner einen Drucksensor 64 auf, der über eine erste Druckmessleitung 63 mit der Feststellbremsleitung 62 verbunden ist und so den Druck P₂ bzw. P_{P} erfasst. Der Drucksensor 64 stellt dann ein entsprechendes elektronisches Signal S_{P} an der ECU bereit, sodass eine Bremskraftregelung in Bezug auf ein Hilfsbremsen von der ECU ausgeführt werden kann und die ECU das Bistabilventil 10 und das Hilfsbremsventil 55 entsprechend steuern kann.

Die Anhängersteuereinheit TCV weist eine Anhängersteuer-Ventileinheit 65 auf. Die Anhängersteuer-Ventileinheit 65 weist eine Einlass-Auslass-Ventileinheit 66, auch als Vorsteuereinheit bezeichnet, auf, die ein Einlassventil IV, ein Auslassventil OV und ein Schaltventil, hier als Redundanzventil RV ausgebildet, aufweist. Ferner weist die Anhängersteuer-Ventileinheit 65 ein erstes Relaisventil 20 auf, welches erfindungsgemäß gerade nicht als inverses Relaisventil ausgebildet ist, sondern als "normales Relaisventil". Das Einlassventil IV ist als 2/2-Wegeventil ausgebildet und weist einen ersten Einlassventil-Anschluss 67a und einen zweiten Einlassventil-Anschluss 67b auf. Der erste Einlassventil-Anschluss 67a ist mit einer dritten Vorratsdruckabzweigleitung 68 verbunden, und der zweite Einlassventil-Anschluss 67b ist mit einer dritten Steuerleitung 69 verbunden. Während in der dritten Vorratsdruckabzweigleitung 68 der Vorratsdruck Pv anliegt, ist durch elektrisches Schalten des Einlassventils IV basierend auf einem Signal S₇ von der Steuereinheit ECU in der dritten Steuerleitung 69 ein dritter Steuerdruck P₃ (Betriebsbrems-Steuerdruck) aussteuerbar. Die dritte Steuerleitung 69 ist mit einem Steuereingang 25 des ersten Relaisventils 20 verbunden.

Das erste Relaisventil 20 weist ferner einen Relaisventil-Arbeitseingang 23, einen Relaisventil-Ausgang 24 und einen Relaisventil-Entlüftungsausgang 26 auf. Der Relaisventil-Entlüftungsausgang 26 ist über eine zweite Entlüftungsabzweigleitung 70 mit der Entlüftungsverteilleitung 51 und somit mit der Drucksenke 3 verbunden. Der Relaisventil-Arbeitseingang 23 dient dazu, einen Vorratsdruck Pv aufzunehmen und ist zunächst mit einer vierten Vorratsdruckabzweigleitung 71 verbunden, die mit einem ersten Anschluss 72a eines Anhängerabrissventils 73 verbunden ist. Das Anhängerabrissventil 73 ist als pneumatisch geschaltetes 2/2-Wegeventil ausgebildet und drucklos offen, in der in Fig. 3 gezeigten Schaltstellung. Bei entsprechender Schaltung des Anhängerabrissventils 73 wird der erste Anschluss 72a des Anhängerabrissventils 73 über eine Drossel mit dem zweiten Anschluss 72b des Anhängerabrissventils 73 verbunden, welcher wiederum über eine fünfte Vorratsdruckabzweigleitung 74 mit der dritten Vorratsdruckabzweigleitung 68 verbunden ist. Im normalen Betrieb ist das Anhängerabrissventil 73 allerdings in der in Fig. 3 gezeigten Stellung, sodass an dem Relaisventil-Arbeitseingang 23 der Vorratsdruck P_{V} anliegt. Über das Anhängerabrissventil 73 wird ferner der Anhängerversorgungsdruckanschluss 21 mittels einer Anhängerversorgungsleitung 86 mit Vorratsdruck P_{V} versorgt.

Empfängt nun das erste Relaisventil 20 den Betriebsbrems-Steuerdruck P₃ an dem Relaisventil-Steuereingang 25, steuert das erste Relaisventil 20 an dem Relaisventil-Ausgang 24 einen entsprechenden vierten Steuerdruck P₄ aus und stellt diesen über eine Anhängerbremsdruckleitung 75 an dem Anhängerbremsdruckanschluss 22 als Bremsdruck P_{B} bereit. Für eine entsprechende Druckregelung ist ein Bremsdrucksensor 76 für die Anhängersteuereinheit TCV vorgesehen, der über eine Bremsdruckmessleitung 77 mit der Anhängerbremsdruckleitung 75 verbunden ist und ein entsprechendes Drucksignal S_{DA} an der Steuereinheit ECU bereitstellt.

Das Auslassventil OV ist elektropneumatisch geschaltet und beim Empfang eines Signals S₈ von der Steuereinheit ECU von dem ersten in Fig. 3 gezeigten stromlosen Schaltzustand, bei dem es geschlossen ist, in einen offenen Schaltzustand, der in Fig. 3 nicht gezeigt ist, versetzbar..

Zur Entlüftung der Bremsen und somit zur Reduktion eines Bremsdrucks P_{B} ist das Auslassventil OV vorgesehen. Das Auslassventil OV ist ebenso wie das Einlassventil IV als 2/2-Wegeventil ausgebildet und weist einen ersten Auslassventilanschluss 78a und einen zweiten Auslassventilanschluss 78b auf. Der erste Auslassventilanschluss 78a ist mit der dritten Steuerleitung 69 verbunden und der zweite Auslassventilanschluss 78b mit einer dritten Entlüftungsabzweigleitung 79. Die dritte Entlüftungsabzweigleitung 79 verläuft von dem zweiten Auslassventil-Anschluss 78b zu der Entlüftungsverteilleitung 51 und somit zur Drucksenke 3.

In einer Variante sind Einlass- und Auslassventil IV/OV integriert und als 3/2-Wegeventil ausgebildet, wobei ein erster Anschluss mit der Leitung 68 verbunden ist, ein zweiter Anschluss mit der Leitung 69 und ein dritter Anschluss mit der Leitung 79.

Um in einem Fehlerfall, in dem von der Steuereinheit ECU keine Signale S₇, S₈ bereitgestellt werden und Einlass- und Auslassventil IV, OV stromlos sind manuell den im Regelfall von der Steuereinheit ECU ausgesteuerten Bremsdruck P_{B} ersetzen zu können, weist das elektropneumatische Steuermodul 1 gemäß der Erfindung einen Redundanzdruckanschluss 42 auf. An den Redundanzdruckanschluss 42 ist über eine Redundanzdruckzufuhrleitung 552 ein Bremswertgeber 528 angeschlossen An den Redundanzdruckanschluss 42 ist im Inneren des Gehäuses 2 eine erste Redundanzdruckleitung 16 angeschlossen. Die Redundanzdruckleitung 16 verläuft zu einem ersten Redundanzventilanschluss 80a. Der zweite Redundanzventilanschluss 80b ist mit einer Redundanzdrucksteuerleitung 81 verbunden, die in die dritte Steuerleitung 69 mündet und somit in den Steuereingang 25 des ersten Relaisventils 20. Das Redundanzventil RV ist als 2/2-Wegeventil ausgebildet und weist eine erste und eine zweite Schaltstellung auf, wobei es in Fig. 3 in der ersten offenen Schaltstellung gezeigt ist.

Das Redundanzventil RV ist stromlos offen und dient dazu auch im Fehlerfall, bei dem die Einlass-Auslass-Ventileinheit 66 stromlos ist, einen Bremsdruck P_{B} aussteuern zu können. Wird im Fehlerfall durch Betätigen des Pedals 590 des Bremswertgebers 528 ein Redundanzdruck P_{R} in der Redundanzdruckzufuhrleitung 552 ausgesteuert, wird dieser Redundanzdruck P_{R} über die erste Redundanzdruckleitung 16, das offene Redundanzventil RV und die Redundanzdrucksteuerleitung 81 an dem Steuereingang 25 des ersten Relaisventils 20 bereitgestellt. An dem Ausgang 24 des ersten Relaisventils 20 wird in der Folge der Bremsdruck P_{B} ausgesteuert.

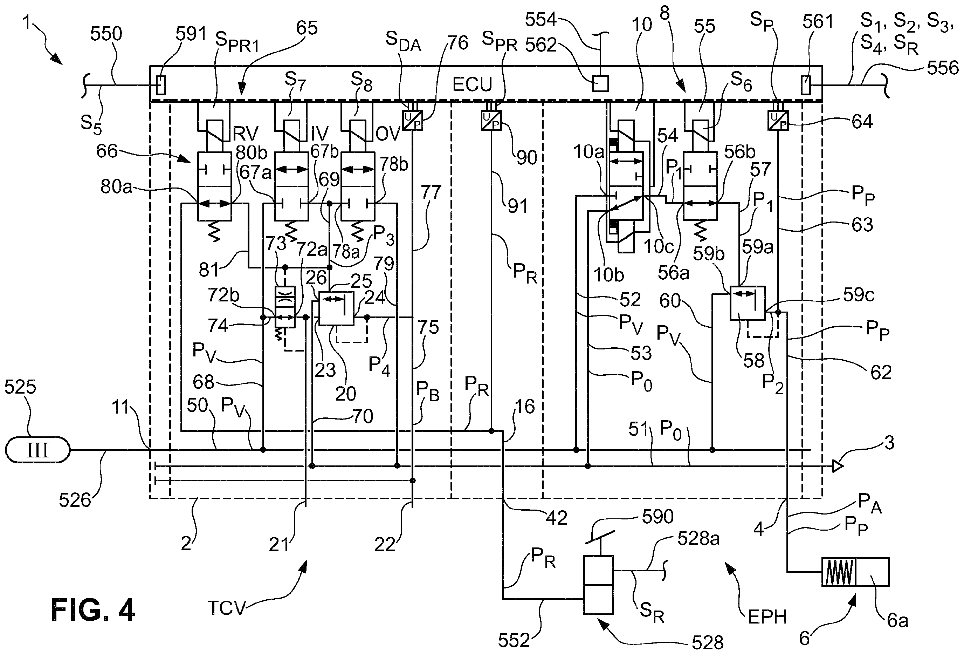

In Fig. 4 ist ein zweites bevorzugtes Ausführungsbeispiel der Erfindung illustriert. Gleiche und ähnliche Elemente sind mit gleichen Bezugszeichen versehen, und insofern wird vollumfänglich auf die obige Beschreibung zu den Fig. 1 und 3 Bezug genommen. Im Folgenden wird im Wesentlichen auf die Unterschiede eingegangen.

Der einzige Unterschied zwischen dem ersten und zweiten Ausführungsbeispiel liegt in einem redundanten Drucksensor 90. Der redundante Drucksensor 90 ist über eine Redundanzdruckmessleitung 91 mit der ersten Redundanzdruckleitung 16 verbunden. Folglich misst der redundante Drucksensor 90 den Druck P_{R} in der ersten Redundanzdruckleitung 16, der manuell durch Betätigung des Bremspedals 590 an dem Redundanzdruckanschluss 42 ausgesteuert wird. Mit Bezug auf das erste Ausführungsbeispiel (Fig. 3) wurde bereits beschrieben, wie der manuell ausgesteuerte Redundanzdruck P_{R} über die erste Redundanzdruckleitung 16 und das Relaisventil 20 zu einem am Anhängerbremsdruckanschluss 22 ausgesteuerten Bremsdruck P_{B} führt. Ebenso wurde beschrieben, dass der Handbremsschalter 534 ein redundantes elektrisches Bremssignal S_{R} bzw. ein Bremsrepräsentationssignal an dem Anschluss 591 der Steuereinheit ECU bereitstellt.

Zur Erkennung einer Fahrerinteraktion bei autonomer Steuerung des Bremssystems 520, kann der redundante Drucksensor 90 genutzt werden. Der redundante Drucksensor 90 misst den manuell ausgesteuerten Redundanzdruck P_{R} und stellt ein entsprechendes Signal S_{PR} an der Steuereinheit ECU bereit.

Das von dem redundanten Drucksensor 90 bereitgestellte Redundanzdrucksignal S_{PR} repräsentiert einen Fahrerwunsch, da der Drucksensor 90 den manuell mittels des Bremswertgebers 528 ausgesteuerten Redundanzdruck P_{R} erfasst. Die Steuereinheit ECU ist vorzugsweise dazu eingerichtet das Signal S_{PR}, das sie vom Drucksensor 90 empfängt, mit einem Betriebs-Bremssignal, das sie beispielsweise von der Steuereinheit 536 für autonomes Fahren über den zweiten CAN-Bus 554 empfängt, zu vergleichen. Für den Fall, dass das redundante elektronische Bremssignal S_{R} bzw. das Drucksignal S_{PR} eine höhere Verzögerungsanforderung repräsentiert als das von der Steuereinheit 536 empfangene Betriebs-Bremssignal, veranlasst die Steuereinheit ECU das Schalten des Redundanzventils RV, um basierend auf dem Redundanzdruck P_{R} die manuelle Aussteuerung eines Bremsdrucks P_{B} am Anhängerbremsdruckanschluss 22 zu ermöglichen. Mit anderen Worten, für den Fall, dass der Fahrer eine stärkere Verzögerung fordert als das Zentralmodul 527 oder die Steuereinheit 536 für autonomes Fahren, wird das Zentralmodul ausgesperrt und der Fahrer übernimmt manuell.

Das erste Relaisventil 20 ist anders als im Stand der Technik nicht als inverses Relaisventil ausgebildet. Eine "automatische" Aussteuerung eines Bremsdrucks P_{B} am Anhängerbremsdruckanschluss 22 für den Fall, dass die Federspeicher 6 entlüftet werden, wie dies bei der "europäischen Anhängersteuerung" der Fall ist, findet bei der gegenständlichen "skandinavischen Anhängersteuerung" nicht statt. Für den Fall, dass die Federspeicher 6 zum Hilfsbremsen oder Zusatzbremsen verwendet werden, wird basierend auf einem entsprechenden Signal S₇ ein Betriebsbrems-Steuerdruck P₃ an dem Relaisventil-Steuereingang 25 des ersten Relaisventils 20 ausgesteuert, sodass die Betriebsbremsen 510a, 510b des Anhängerwagens 504 in Übereinstimmung mit den Federspeichern 6 gebremst werden.

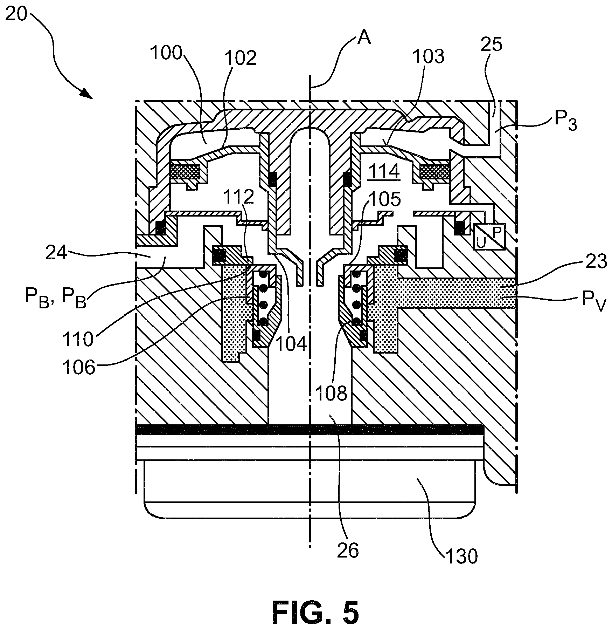

Weiterhin ist das erste Relaisventil 20 anders als im Stand der Technik bekannt, mit nur einer gemeinsamen Steuerkammer 100 (vgl. Fig. 5) ausgebildet. Wie mit Bezug auf Fig.3, 4 bereits erläutert wurde, weist das erste Relaisventil 20 einen Relaisventil-Steuereingang 25, den Relaisventil-Arbeitseingang 23, an den die vierte Abzweigleitung 71 der Vorratsverteilleitung 50 angeschlossen ist, und an dem der Druck Pv anliegt, einen Relaisventil-Ausgang 24, der über die Anhängerbremsdruckleitung 75 mit dem Anhängerbremsdruckanschluss 22 verbunden ist und über den der Steuerdruck P₄, bzw. der Bremsdruck P_{B} aussteuerbar ist, sowie einen Relaisventil-Entlüftungsausgang 26 auf, über den der Relaisventil-Ausgang 24 entlüftet werden kann, und der mit der Drucksenke 3 verbunden ist. An dem Relaisventil-Entlüftungsausgang 26 liegt folglich ein Druck P₀ an, der dem Druck der Drucksenke 3, insbesondere der Umgebung, entspricht. Der Entlüftungsausgang 26 läuft in diesem Ausführungsbeispiel über einen Geräuschdämpfer 130, der nicht im Detail gezeigt ist, im Stand der Technik aber bekannt ist.

Die einzige Steuerkammer 100 ist mit dem einzigen Relaisventil-Steuereingang 25 verbunden. Die einzige Steuerkammer 100 wird begrenzt durch einen einzigen Steuerkolben 102, der eine einzige Steuerfläche 103 aufweist. Der einzige Steuerkolben 102 ist axial gleitend entlang einer Achse A geführt. Bei Belüftung des Relaisventil-Steuereingangs 25 mit dem Betriebsbrems-Steuerdruck P₃ oder dem Redundanzdruck P_{R} kann sich der Kolben 102 in Bezug auf Fig. 5 nach unten bewegen und kommt mit einem Ventilsitz 104 in Kontakt mit einem entsprechenden Ventilsitz 105 eines Schieberings 106. Der Schiebering 106 ist mittels einer Spiralfeder 108 federbelastet und in die in Fig. 5 gezeigte obere Position vorgespannt. Der Schiebering 106 weist einen zweiten Ventilsitz 110 auf, der gegen einen Vorsprung 112 abdichtet und somit den Relaisventil-Arbeitseingang 23 im drucklosen Zustand, das heißt ohne Steuerdruck P₃, geschlossen hält.

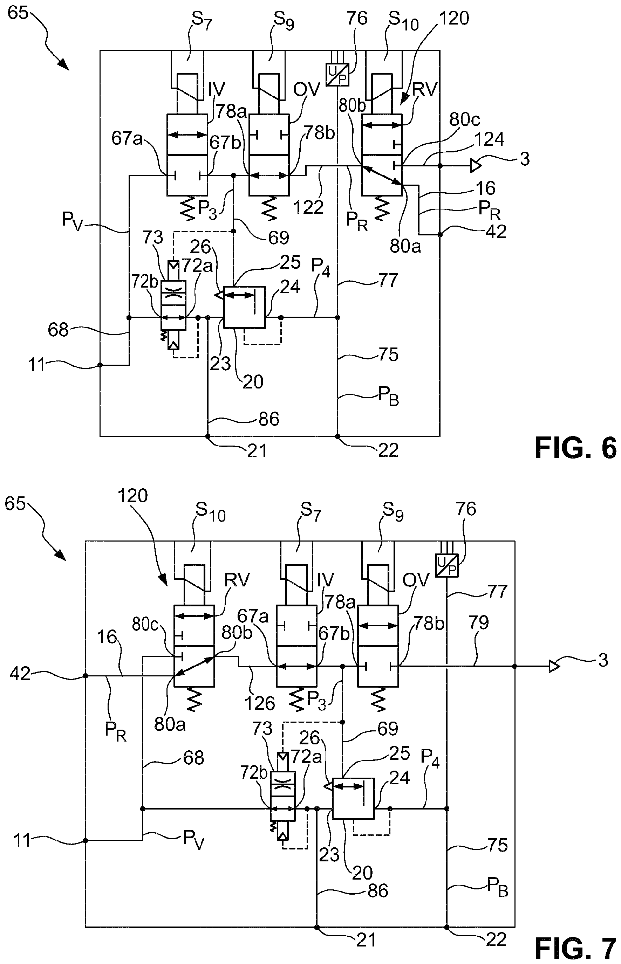

Der Steuerkolben ist in Fig. 7 in einer offenen Stellung gezeigt. In seiner Abschlussstellung ist der Ventilsitz 104 in Kontakt mit dem Schiebering 106. In der Abschlussstellung sind sowohl der Eingang 23, als auch der Ausgang 24 gegenüber dem Entlüftungsausgang 26 abgeschlossen.

Aufgrund des ausgesteuerten Betriebsbrems-Steuerdrucks P₃ wirkt eine Kraft auf den Steuerkolben 102, die zum Öffnen des Ventilsitzes 110 führt sodass der Druck Pv in den Arbeitsraum 114 überspringen kann. Der Druck in dem Arbeitsraum 114 steigt an und führt zu einer Gegenkraft auf den Steuerkolben 102, sodass sich der Steuerkolben wieder in die Abschlussstellung bewegt. Entsprechend wird ein Bremsdruck P_{B} an dem Ausgang 24 ausgesteuert und dort gehalten.

Da an dem Relaisventil-Steuereingang 25 aufgrund der Schaltung von Redundanzventil RV und Einlassventil IV und der Redundanzdrucksteuerleitung 81 sowie der dritten Steuerleitung 69 sowohl ein elektronisch ausgesteuerter Betriebsbrems-Steuerdruck P₃ als auch der manuell ausgesteuerte Redundanzdruck P_{R} anliegen können, ist es möglich mittels des ersten Relaisventils 20, das nur einen einzigen Steuerkolben 102 aufweist und eine gemeinsame Steuerkammer 100 für die beiden Drücke P₃, P_{R} sowohl den elektrisch ausgesteuerten Bremsdruck P_{B} als auch manuell als Redundanzdruck einen Bremsdruck P_{B} an dem Anhängerbremsdruckanschluss 22 auszusteuern.

Die Figuren 6 und 7 zeigen ein drittes und viertes Ausführungsbeispiel des elektropneumatischen Steuermoduls 1, bzw. der Anhängersteuer-Ventileinheit 65. Da die restlichen Elemente in dem dritten und vierten Ausführungsbeispiel (Figuren 6 und 7) identisch zu dem ersten und zweiten Ausführungsbeispiel (Fig. 3, 4) sind, ist in den Figuren 6 und 7 jeweils nur die Anhängersteuer-Ventileinheit 65 gezeigt. Gleiche oder ähnliche Elemente sind mit gleichen Bezugszeichen versehen, sodass vollumfänglich auf die obige Beschreibung Bezug genommen wird.

Sowohl in dem dritten Ausführungsbeispiel (Fig. 6) als auch in dem vierten Ausführungsbeispiel (Fig. 7) ist ein wesentlicher Unterschied, dass das Redundanzventil RV als 3/2-Wegeventil 120 ausgebildet ist.

Mit Bezug auf das dritte Ausführungsbeispiel (Fig. 6) liegt der wesentliche Unterschied in der Verschaltung des Redundanzventils RV, das als 3/2-Wegeventil 120 ausgebildet ist. Ein weiterer Unterschied liegt in der Umkehrung des Auslassventils OV, das in den Schaltstellungen umgekehrt ist, sodass es stromlos offen ist, wie in der in Fig. 6 gezeigten Schaltstellung. Das Auslassventil ist in Abweichung zum ersten und zweiten Ausführungsbeispiel (Fig. 3, 4) mit seinem zweiten Auslassventilanschluss 78b nicht unmittelbar an die dritte Entlüftungsabzweigleitung 79 angeschlossen, sondern an eine erste Verbindungsleitung 122, die den zweiten Auslassventilanschluss 78b mit dem zweiten Redundanzventilanschluss 80b verbindet. Der dritte Redundanzventilanschluss 80c des 3/2-Wegeventils 120 ist über eine vierte Entlüftungsabzweigleitung 124 mit der Drucksenke 3 verbunden.

Die Arbeitsweise dieses Layouts ist wie folgt: Im Normalfahrbetrieb wird das Auslassventil OV basierend auf einem von der Steuereinheit ECU bereitgestellten Signal S₉ in die zweite, nicht gezeigte und geschlossene Schaltstellung, geschaltet. Über Schaltung des Einlassventils IV basierend auf dem Signal S₇ der elektronischen Steuereinheit ECU kann dann ein Steuerdruck P₃ an dem Relaisventil-Steuereingang 25 des ersten Relaisventils 20 ausgesteuert werden, und basierend auf diesem wiederum ein Steuerdruck P₄ an dem Relaisventil-Ausgang 24. Auch das Redundanzventil RV ist im Normalfahrbetrieb in der zweiten, nicht gezeigten Schaltstellung, basierend auf einem Signal S₁₀. In dem stromlosen Zustand (wie in Fig. 6 gezeigt) ist der erste Redundanzventilanschluss 80a mit dem zweiten Redundanzventilanschluss 80b verbunden, sodass in der ersten Verbindungsleitung 122 der Redundanzdruck P_{R} aussteuerbar ist. Im normalen Fahrbetrieb ist es aber bevorzugt, dass der Redundanzdruck P_{R} ausgesperrt ist, und so wird das Signal S₁₀ angelegt, um das Redundanzventil RV in die zweite nicht gezeigte Schaltstellung zu bringen. In dieser zweiten nicht gezeigten Schaltstellung ist der zweite Redundanzventilanschluss 80b mit dem dritten Redundanzventilanschluss 80c verbunden. Das heißt, in der zweiten nicht gezeigten Schaltstellung des Redundanzventils RV ist die Drucksenke 3 mit dem zweiten Auslassventilanschluss 78b verbunden. Folglich kann der Relaisventil-Steuereingang 25 über entsprechende Schaltung des Auslassventils OV in die stromlose Stellung entlüftet werden, um so keinen Bremsdruck P_{B} an dem Anhängerbremsdruckanschluss 22 auszusteuern.

Der Vorteil dieser Schaltung ist im Falle eines Fehlers zu erkennen, wenn kein Signal mehr durch die elektronische Steuereinheit ECU ausgesteuert werden kann. In diesem Fall befinden sich das Einlassventil IV, das Auslassventil OV und das Redundanzventil RV jeweils im stromlosen, in Fig. 6 gezeigten Zustand. In diesem Zustand ist der Vorratsdruck Pv über das Einlassventil IV ausgesperrt und der Redundanzdruck P_{R} liegt an dem Relaisventil-Steuereingang 25 des ersten Relaisventils 20 an. Selbst im Falle eines Ausfalls der elektronischen Steuereinheit ECU kann also ein Bediener mittels des Bremswertgebers 528 redundant einen Bremsdruck P_{B} an dem Anhängerbremsdruckanschluss 22 aussteuern.

Ein viertes Ausführungsbeispiel ist in Fig. 7 gezeigt. Wiederum liegen die Unterschiede nur in der Anhängersteuer-Ventileinheit 65 und nur diese ist daher in Fig. 7 dargestellt. Es soll aber verstanden werden, dass diese ebenso mit den weiteren Komponenten des elektropneumatischen Steuermoduls 1 wie es in Fig. 3 und 4 dargestellt ist, zusammenwirken.

Auch bei der in Fig. 7 gezeigten Ausführungsform des elektropneumatischen Steuermoduls 1, bzw. konkreter dem Detail der Anhängersteuer-Ventileinheit 65, ist das Redundanzventil RV als 3/2-Wegeventil 120 ausgebildet. Der erste Redundanzventilanschluss 80a ist wiederum über die erste Redundanzdruckleitung 16 mit dem Redundanzdruckanschluss 42 verbunden. Der zweite Redundanzventilanschluss 80b ist, wie dies auch in dem ersten und zweiten Ausführungsbeispiel (Fig. 3, 4) der Fall ist, mit einer pneumatischen Leitung, hier einer zweiten Verbindungsleitung 126, verbunden. In Abweichung zum ersten und zum zweiten Ausführungsbeispiel ist der dritte Redundanzventilanschluss 80c mit der dritten Vorratsdruckabzweigleitung 68 verbunden. Die zweite Verbindungsleitung 126 ist weiterhin mit dem ersten Anschluss 67a des Einlassventils IV verbunden und der zweite Einlassventilanschluss 67b ist, wie dies auch beim ersten Ausführungsbeispiel der Fall ist, mit der Steuerleitung 69 verbunden.

Die Funktionsweise dieses Schaltungslayouts ist wie folgt: Im stromlosen Zustand, das heißt ohne Signal S₁₀ befindet sich das Redundanzventil RV in der in Fig. 7 gezeigten ersten Schaltstellung. In der ersten stromlosen Schaltstellung ist der erste Redundanzventilanschluss 80a mit dem zweiten Redundanzventilanschluss 80b verbunden. In der stromlosen Stellung lässt sich also ein Redundanzdruck P_{R} an der zweiten Verbindungsleitung 126 aussteuern. Im normalen Fahrbetrieb wird allerdings ein Signal S₁₀ geschaltet, sodass der dritte Redundanzventilanschluss 80c mit dem zweiten Redundanzventilanschluss 80b verbunden ist und der Vorratsdruck P_{V} an der zweiten Verbindungsleitung 126 ausgesteuert wird.

Das Einlassventil IV ist stromlos offen und in der ersten Schaltstellung (in Fig. 7 gezeigt), das Auslassventil OV ist stromlos geschlossen und in der ersten Schaltstellung (in Fig. 7 gezeigt). Im normalen Fahrbetrieb ist das Einlassventil IV geschlossen und ein Signal S₇ liegt an. Wird nun das Einlassventil IV geöffnet, kann der Steuerdruck P₃ von dem Vorratseingang 11 über die dritte Vorratsabzweigleitung 68, den dritten Redundanzventilanschluss 80c, den zweiten Redundanzventilventilanschluss 80b, die zweite Verbindungsleitung 126, den ersten Einlassventilanschluss 67a, den zweiten Einlassventilanschluss 67b und die dritte Steuerleitung 69 an dem Relaisventil-Steuereingang 25 ausgesteuert werden, wodurch wiederum ein Bremsdruck P_{B} an dem Anhängerbremsdruckanschluss 22 ausgesteuert wird. Zum Entlüften des Relaisventil-Steuereingangs 25 wird dann von der elektronischen Steuereinheit ECU ein Signal S₉ an das Auslassventil OV gesendet, sodass dieses in die zweite Schaltstellung (offene Schaltstellung) geschaltet wird, während das Einlassventil IV mit einem Signal S₇ in die geschlossene zweite Schaltstellung versetzt wird. Mithin ist der Relaisventil-Steuereingang 25 über die dritte Steuerleitung 69, den ersten Auslassventilanschluss 78a, den zweiten Auslassventilanschluss 78b und die dritte Entlüftungsabzweigleitung 79 mit der Drucksenke 3 verbunden und kann entlüftet werden. der Bremsdruck P_{B} nimmt wieder ab.

Auch in diesem Layout ist die Stellung der Ventile RV, IV, OV so gewählt, dass für den Fall, dass die Steuereinheit ECU ausfällt, ein Redundanzdruck P_{R} an dem Redundanzdruckanschluss 42 dazu führt, das an dem Anhängerbremsdruckanschluss 22 ein Bremsdruck P_{B} ausgesteuert wird. Das Redundanzventil RV verbindet im stromlosen Zustand den Redundanzdruckanschluss 42 mit der zweiten Verbindungsleitung 126. Das Einlassventil IV ist stromlos offen und der Redundanzdruck P_{R} kann über das Einlassventil IV in die dritte Steuerleitung 69 gelangen. Stromlos ist das Auslassventil OV geschlossen und sperrt die dritte Steuerleitung 69 gegenüber der Drucksenke 3 ab. Der Redundanzdruck PR liegt in diesem Fall also an dem Relaisventil-Steuereingang 25 an und ein Bremsdruck P_{B} kann an dem Anhängerbremsdruckanschluss 22 ausgesteuert werden.

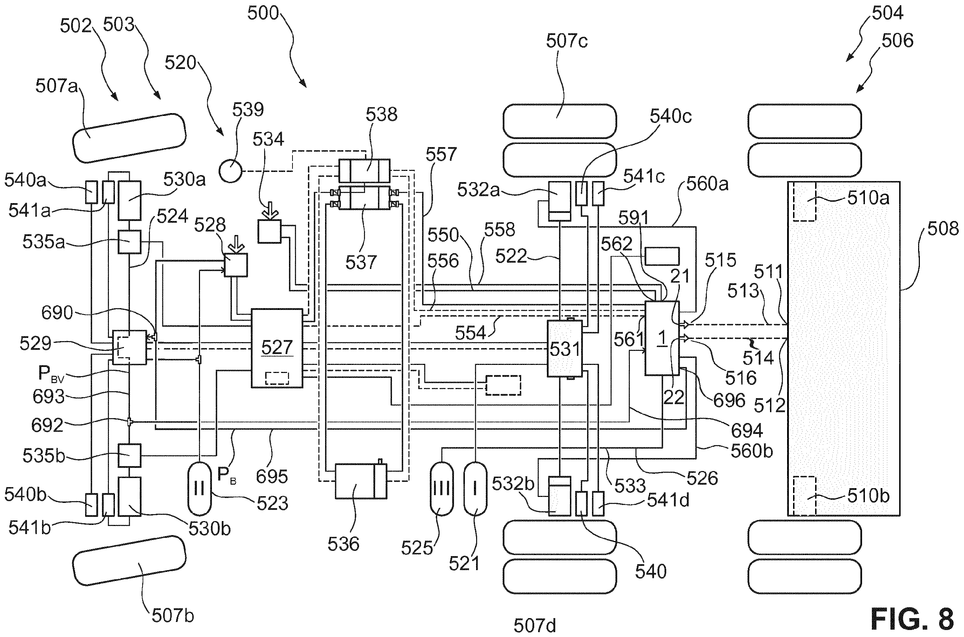

Figur 8 zeigt nun ein fünftes Ausführungsbeispiel. Grundsätzlich ähnelt das in Figur 8 gezeigte Bremssystem 520 demjenigen gemäß Figur 1 und gleiche und ähnliche Elemente sind mit gleichen Bezugszeichen versehen. Insofern wird vollumfänglich auf die obige Beschreibung der Fig.1 Bezug genommen. Im Folgenden wird daher im Wesentlichen auf die Unterschiede eingegangen.

Im Unterschied zum ersten Ausführungsbeispiel der Fig.1 ist der Redundanzanschluss 42 nicht mit über die Redundanzdruckzufuhrleitung 552 mit dem Bremswertgeber 528 verbunden; vielmehr wird an dem Redundanzanschluss 42 der Bremsdruck einer anderen Fahrzeugachse, in diesem Ausführungsbeispiel der Vorderachs-Bremsdruck P_{BV}, ausgesteuert. Dazu ist eine zweite Redundanzdruckzufuhrleitung 694 vorgesehen, die über ein T-Stück 692 mit einer Vorderachs-Bremsdruckleitung 693 verbunden ist. Über diese zweite Redundanzdruckzufuhrleitung 694 wird der Vorderachs-Bremsdruck P_{BV} der Betriebsbremsen 530a, 530b der Vorderachse 503 an dem Redundanzdruckanschluss 42 ausgesteuert.

Der Bremswertgeber 528 ist dann abweichend zum ersten Ausführungsbeispiel (Fig. 1) über ein Vorderachs-Wechselventil 690 mit dem Vorderachsmodulator 529 verbunden, um den Bremswertgeber-Steuerdruck P_{BST} an dem Vorderachsmodulator 529 redundant auszusteuern. Für den Fall, dass sowohl das elektropneumatische Steuermodul 1 aufgrund eines Fehlers stromlos ist und auch der Vorderachsmodulator 529 aufgrund des Fehlers oder eines anderen Fehlers stromlos ist, ist es möglich, auf diese Weise den manuell mittels des Fußpedals 600 ausgesteuerten Bremswertgeber-Steuerdruck P_{BST} über den Vorderachsmodulator 529 als Redundanzdruck P_{R} an dem Redundanzdruckanschluss 42 des elektropneumatischen Steuermoduls 1 auszusteuern.

Umgekehrt ist an das Vorderachs-Wechselventil 690 eine Steuerleitung 695 des elektropneumatischen Steuermoduls 1 angeschlossen, in die von dem elektropneumatischen Steuermodul 1 der Bremsdruck P_{B} des Anhängers 504 ausgesteuert wird. Die Steuerleitung 695 ist in Figur 8 so gezeigt, dass sie separat an einen Vorderachssteuerleitungsanschluss 696 des elektropneumatischen Steuermoduls 1 angeschlossen ist; in anderen Ausführungsformen kann sie auch von der pneumatischen Leitung 514 zum Anhängerwagen 504 abzweigen.

Das Vorderachs-Wechselventil 690 ist beispielsweise als Select-High-Ventil ausgebildet, sodass an dem Vorderachsmodulator 529 stets der höhere Druck des Bremsdrucks P_{B} und des Bremswertgeber-Steuerdruck P_{BST} ausgesteuert wird.

### Bezugszeichenliste (Bestandteil der Beschreibung)

- A: Achse
- ECU: elektronische Steuereinheit
- EPH: Feststellbremseinheit
- IV: Einlassventil
- OV: Auslassventil
- P₀: Umgebungsdruck
- P₁: erster Steuerdruck
- P₂: zweiter Steuerdruck
- P₃: dritter Steuerdruck (Betriebsbrems-Steuerdruck)
- P₄: vierter Steuerdruck
- P_{B}: Bremsdruck am Anhängerbremsdruckanschluss 22
- P_{BST}: Bremswergeber-Bremsdruck
- P_{BV}: Vorderachs-Bremsdruck
- P_{P}: Parkbremsdruck am Federspeicheranschluss 4
- P_{R}: Redundanzdruck
- P_{V}: Vorratsdruck
- RV: Redundanzventil (Schaltventil)
- S₁: Bremssignal (erstes Hilfsbremssignal)
- S₂: Bremssignal (zweites Hilfsbremssignal)
- S₃: Feststellbremssignal
- S₄: Feststellbremssignal
- S₅: Handbremssignal
- S₆: Signal für Hilfsbremsventil
- S₇: Signal für Einlassventil
- S₈: Signal für Auslassventil
- S₉: Signal für Auslassventil
- S₁₀: Signal für Redundanzventil
- S_{DA}: Drucksignal
- S_{P}: Signal des Drucksensors 64
- S_{R}: redundantes elektronisches Bremssignal
- TCV: Anhängersteuereinheit
- 1: elektropneumatisches Steuermodul
- 2: Gehäuse
- 3: Drucksenke
- 4: Federspeicheranschluss
- 6: Federspeicher
- 6a: Zylinder des Federspeichers
- 8: Feststellbrems-Ventileinheit
- 10: Bistabilventil
- 10a: erster Bistabilventil-Anschluss
- 10b: zweiter Bistabilventil-Anschluss
- 10c: dritter Bistabilventil-Anschluss
- 11: Vorratseingang
- 16: erste Redundanzdruckleitung
- 17: zweite Redundanzdruckleitung
- 20: erstes Relaisventil
- 21: Anhängerversorgungsdruckanschluss
- 22: Anhängerbremsdruckanschluss
- 23: Relaisventil-Arbeitseingang
- 24: Relaisventil-Ausgang
- 25: Relaisventil-Steuereingang
- 26: Relaisventil-Entlüftungsausgang
- 42: Redundanzdruckanschluss
- 50: Vorratsverteilleitung
- 51: Entlüftungsverteilleitung
- 52: erste Vorratsabzweigleitung
- 53: erste Entlüftungsabzweigleitung
- 54: erste Steuerleitung
- 55: Hilfsbremsventil
- 56a: erster Hilfsbremsventilanschluss
- 56b: zweiter Hilfsbremsventilanschluss
- 57: zweite Steuerleitung
- 58: EPH-Relaisventil
- 59a: EPH-Relaisventil-Steuereingang
- 59b: EPH-Relaisventil-Vorratsanschluss
- 59c: EPH-Relaisventil-Ausgang
- 60: zweite Vorratsabzweigleitung
- 62: Federspeicherleitung
- 63: erste Druckmessleitung
- 64: Drucksensor
- 65: Anhängersteuer-Ventileinheit
- 66: Einlass-Auslass-Ventileinheit (Vorsteuereinheit)
- 67a: erster Einlassventilanschluss
- 67b: zweiter Einlassventilanschluss
- 68: dritte Vorratsdruckabzweigleitung
- 69: dritte Steuerleitung
- 70: zweite Entlüftungsabzweigleitung
- 71: vierte Vorratsdruckabzweigleitung
- 72a: erster Anschluss d. Anhängerabrissventils
- 72b: zweiter Anschluss d. Anhängerabrissventils
- 73: Anhängerabrissventil
- 74: fünfte Vorratsdruckabzweigleitung
- 75: Anhängerbremsdruckleitung
- 76: Bremsdrucksensor
- 77: Bremsdruckmessleitung
- 78a: erster Auslassventilanschluss
- 78b: zweiter Auslassventilanschluss
- 79: dritte Entlüftungsabzweigleitung
- 80a: erster Redundanzventilanschluss
- 80b: zweiter Redundanzventilanschluss
- 80c: dritter Redundanzventilanschluss
- 81: Redundanzdrucksteuerleitung
- 86: Anhängerversorgungsleitung
- 90: redundanter Drucksensor
- 91: Redundanzdruckmessleitung
- 100: Steuerkammer
- 102: Steuerkolben
- 103: Steuerfläche
- 104: Ventilsitz d. Steuerkolben
- 105: Ventilsitz eines Schieberings
- 106: Schiebering
- 108: Spiralfeder
- 110: zweiter Ventilsitz
- 112: Vorsprung
- 114: Arbeitsraum
- 120: 3/2-Wegeventil
- 122: erste Verbindungsleitung
- 124: vierte Entlüftungsabzweigleitung
- 126: zweite Verbindungsleitung
- 130: Geräuschdämpfer
- 500: Fahrzeugzug
- 502: Zugwagen
- 503: Vorderachse
- 504: Anhängerwagen
- 506: Achse d. Anhängerwagens 504
- 507a, 507b, 507c, 507d: Räder
- 508: Anhänger-Betriebbremssystem
- 510a, 510b: zwei Betriebsbremsen
- 511, 512: Anschlüsse
- 513, 514: pneumatische Leitungen
- 515, 516: Anschlüsse
- 520: pneumatisches Bremssystem
- 521: erster Vorrat
- 522: Hinterachsbremskreislauf
- 523: zweiter Vorrat
- 524: Vorderachsbremskreislauf
- 525: dritter Vorrat
- 526: pneumatische Vorratszufuhrleitung
- 527: Zentralmodul
- 528: Bremswertgeber (BST)
- 529: Vorderachsmodulator
- 530a, 530b: zwei vordere Betriebsbremsen
- 531: Hinterachsmodulator
- 532a, 532b: zwei (Tristop-)Betriebsbremsen
- 533: Anhängerbremskreislauf
- 534: elektronischer Handbremsschalter (HCU)
- 535a, 535b: ABS-Module
- 536: Steuereinheit
- 537: Energiequelle
- 538: SAE-Einheit (Fahrzeugbus)
- 539: Lenkwinkel-Sensor
- 540a, 540b, 540c, 540d: Sensoren für Bremsbelagverschleißsensierung
- 541a, 541b, 541c, 541d: Sensoren für eine Drehzahl der Räder
- 550: Signalleitung
- 552: Redundanzdruckzufuhrleitung
- 554: erster CAN-Bus (direkt)
- 556: zweiter CAN-Bus (indirekt)
- 557: Spannungsversorgung
- 558: Spannungsversorgung
- 560a, 560b: pneumatische Leitungen
- 561: erster Busanschluss
- 562: zweiter Busanschluss
- 590: Bremspedal
- 591: elektrischer Anschluss für HCU
- 690: Vorderachs-Wechselventil
- 692: T-Stück
- 693: Vorderachs-Bremsdruckleitung
- 694: zweite Redundanzdruckzufuhrleitung
- 695: Steuerleitung
- 696: Vorderachssteuerleitungsanschluss

## Patentansprüche

1. Elektropneumatisches Steuermodul (1) für ein elektronisch steuerbares pneumatisches Bremssystem (520) für einen Fahrzeugzug (500) mit einem Zugwagen (502) und einem Anhängerwagen (504), mit:
einem pneumatischen Vorratseingang (11), der mit einem Druckluftvorrat (525) verbindbar ist,
einer Anhängersteuereinheit (TCV), die eine Anhängersteuer-Ventileinheit (65) mit einem oder mehreren elektropneumatischen Ventilen (RV, IV, OV), einen Anhängerbremsdruckanschluss (22) und einen Anhängerversorgungsdruckanschluss (21) aufweist,
einer Feststellbremseinheit (EPH), die einen Federspeicher-Anschluss (4) für einen Federspeicher (6) für einen Zugwagen und eine Feststellbrems-Ventileinheit (8) mit einem oder mehreren elektropneumatischen Ventilen (10, 55) aufweist, und
einer elektronischen Steuereinheit (ECU) zum Steuern der Anhängersteuer-Ventileinheit (65) und der Feststellbrems-Ventileinheit (8),
wobei die Anhängersteuereinheit (TCV) ein erstes Relaisventil (20) aufweist, welches
einen mit dem Vorratseingang (11) verbundenen Relaisventil-Arbeitseingang (23), einen mit dem Anhängerbremsdruckanschluss (22) verbundenen Relaisventil-Ausgang (24), und einen Relaisventil-Entlüftungsausgang (26), über den der Relaisventil-Ausgang (24) mit einer Drucksenke (3) verbindbar ist, aufweist,
**dadurch gekennzeichnet, dass** das erste Relaisventil (20) einen einzigen Relaisventil-Steuereingang (25) aufweist, der in eine gemeinsame Steuerkammer (100) mündet,
wobei der Relaisventil-Steuereingang (25) mittels der Anhängersteuer-Ventileinheit (65) mit dem Vorratseingang (11) und/oder einer Entlüftung (3) verbindbar ist, um einen Betriebsbrems-Steuerdruck (P3) in der gemeinsamen Steuerkammer (100) auszusteuern, und wobei im Falle eines Fehlers des elektropneumatisches Steuermodul (1) ein Redundanzdruck (PR) in die gemeinsame Steuerkammer aussteuerbar ist, um einen Bremsdruck (P_{B}) an dem Anhängerbremsdruckanschluss (22) auszusteuern.

2. Elektropneumatisches Steuermodul (1) nach Anspruch 1, wobei das erste Relaisventil (20) eine einzige Steuerkammer (100) aufweist.

3. Elektropneumatisches Steuermodul (1) nach Anspruch 1 oder 2, wobei die gemeinsame Steuerkammer (100) des ersten Relaisventils (20) durch einen einzigen Steuerkolben (102) begrenzt ist.

4. Elektropneumatisches Steuermodul (1) nach Anspruch 3, wobei der Steuerkolben (102) des ersten Relaisventils (20) eine einzige Steuerfläche (103) aufweist.

5. Elektropneumatisches Steuermodul (1) nach einem der vorstehenden Ansprüche, wobei die Anhängersteuer-Ventileinheit (65) ein elektronisch schaltbares Einlassventil (IV) mit wenigstens einem ersten und einem zweiten Einlassventilanschluss (67a, 67b) aufweist, wobei der erste Einlassventilanschluss (67a) mit dem Vorratseingang (11), und der zweite Einlassventilanschluss (67b) mit der Steuerkammer (100) des ersten Relaisventils (20) verbunden ist, um die Steuerkammer (100) mittels Schalten des Einlassventils (IV) zu belüften.

6. Elektropneumatisches Steuermodul (1) nach einem der vorstehenden Ansprüche, aufweisend
einen Redundanzdruckanschluss (42) mit einer ersten Redundanzdruckleitung (16) zum Anschluss eines Bremswertgebers (528) oder des Brems- oder Steuerdrucks einer der anderen Fahrzeugachsen (503), über den der Bremsdruck (P_{B}) an dem Anhängerbremsdruckanschluss (22) aussteuerbar ist.

7. Elektropneumatisches Steuermodul nach einem der Ansprüche 1 bis 5, aufweisend einen Redundanzdruckanschluss (42) über den der Bremsdruck (P_{B}) an dem Anhängerbremsdruckanschluss (22) aussteuerbar ist, wobei ein Bremsdruck (P_{BV}) einer Betriebsbremse (530a, 530b) an dem Redundanzdruckanschluss (42) aussteuerbar ist.

8. Elektropneumatisches Steuermodul (1) nach Anspruch 6 oder 7, wobei die Anhängersteuer-Ventileinheit (65) ein elektronisch schaltbares Redundanzventil (RV) mit wenigstens einem ersten und einem zweiten Redundanzventilanschluss (80a, 80b) aufweist, wobei der erste Redundanzventilanschluss (80a) mit dem Redundanzdruckanschluss (42), und der zweite Redundanzventilanschluss (80b) über eine zweite Redundanzdruckleitung (17) mit der Steuerkammer (100) des ersten Relaisventils (20) verbunden ist, um in der Steuerkammer (100) mittels Schalten des Redundanzventils (RV) den Redundanzdruck (P_{R}) auszusteuern.

9. Elektropneumatisches Steuermodul (1) nach einem der vorstehenden Ansprüche, wobei die Anhängersteuer-Ventileinheit (65) ein elektronisch schaltbares Auslassventil (OV) mit wenigstens einem ersten und einem zweiten Auslassventilanschluss (78a, 78b) aufweist, wobei der erste Auslassventilanschluss (78a) mit der Steuerkammer (100) des ersten Relaisventils (20), und der zweite Auslassventilanschluss (78b) mit einer Drucksenke (3) verbunden ist, um die Steuerkammer (100) mittels Schalten des Auslassventils (OV) zu entlüften.

10. Elektropneumatisches Steuermodul (1) nach Anspruch 8, wobei das Redundanzventil (RV) als 3/2-Wegeventil ausgebildet ist und einen dritten Redundanzventilanschluss (80c) aufweist, wobei der dritte Redundanzventilanschluss (80c) an eine Drucksenke (3) angeschlossen ist.

11. Elektropneumatisches Steuermodul (1) nach Anspruch 8, wobei die zweite Redundanzdruckleitung (17) mit dem zweiten Auslassventilanschluss (78b) verbunden ist, sodass in einer ersten Schaltstellung des Redundanzventils (RV) bei geöffnetem Auslassventil (OV) ein Redundanzdruck (P_{R}) von dem Redundanzdruckanschluss (42), über das Redundanzventil (RV) und das Auslassventil (OV) in die Steuerkammer (100) aussteuerbar ist, und in einer zweiten Schaltstellung des Redundanzventils (RV) die Steuerkammer (100) über das geöffnete Auslassventil (OV) und das Redundanzventil (RV) entlüftet werden kann.

12. Elektropneumatisches Steuermodul (1) nach Anspruch 8, wobei das Redundanzventil (RV) als 3/2-Wegeventil ausgebildet ist und einen dritten Redundanzventilanschluss (80c) aufweist, wobei der dritte Redundanzventilanschluss (80c) an den Vorratseingang (11) angeschlossen ist.

13. Elektropneumatisches Steuermodul (1) nach Anspruch 12, wobei die zweite Redundanzdruckleitung (17) mit dem ersten Einlassventilanschluss (67a) verbunden ist, sodass in einer ersten Schaltstellung des Redundanzventils (RV) bei geöffnetem Einlassventil (IV) ein Redundanzdruck (P_{R}) von dem Redundanzdruckanschluss (42), über das Redundanzventil (RV) und das Einlassventil (IV) in die Steuerkammer (100) aussteuerbar ist, und in einer zweiten Schaltstellung des Redundanzventils (RV) ein Steuerdruck (P₃) von dem Vorratseingang (11), über das Redundanzventil (RV) und das Einlassventil (IV) in die Steuerkammer (100) aussteuerbar ist.

14. Elektropneumatisches Steuermodul (1) nach einem der vorstehenden Ansprüche, wobei die elektronische Steuereinheit (ECU) dazu eingerichtet ist
- die Feststellbrems-Ventileinheit (8) basierend auf einem ersten elektronischen Hilfsbremssignal (S₁) zu veranlassen wenigstens ein Ventil (10, 55) der Feststellbrems-Ventileinheit (8) so zu schalten, dass an dem Federspeicher-Anschluss (4) ein Arbeitsdruck (P_{A}) zum temporären und gestuften Entlüften des Federspeichers (6) aussteuerbar ist; und
- die Anhängersteuer-Ventileinheit (65) basierend auf dem ersten elektronischen Hilfsbremssignal (S₁) oder einem zweiten Hilfsbremssignal (S₂) zu veranlassen wenigstens ein Ventil (IV) der Anhängersteuer-Ventileinheit (65) so zu schalten, dass an dem Anhängerbremsdruckanschluss (22) ein Bremsdruck (P_{B}) aussteuerbar ist.

15. Elektropneumatisches Steuermodul (1) nach einem der vorstehenden Ansprüche, wobei die elektronische Steuereinheit (ECU), die Anhängersteuereinheit (TCV) und die Feststellbremseinheit (EPH) in einem Modul integriert sind.

16. Elektropneumatisches Steuermodul (1) nach einem der vorstehenden Ansprüche, mit einem gemeinsamen Gehäuse (2), in dem mindestens die Komponenten der elektronischen Steuereinheit (ECU), der Anhängersteuereinheit (TCV) und der Feststellbremseinheit (EPH) angeordnet sind.

17. Elektropneumatisches Steuermodul (1) nach einem der vorstehenden Ansprüche, wobei kein inverses Relaisventil vorgesehen ist.

18. Elektropneumatisches Steuermodul (1) nach einem der vorstehenden Ansprüche, mit einem elektrischen Anschluss (561, 591) zum Empfang eines redundanten elektronischen Bremsrepräsentationssignals (S_{R}, S₅), wobei die Steuereinheit (ECU) dazu eingerichtet ist, in Abhängigkeit des empfangenen redundanten elektronischen Bremsrepräsentationssignals (S_{R}, S₅) wenigstens ein Ventil (IV, RV) der Anhängersteuer-Ventileinheit (65) so zu schalten, dass ein entsprechender Bremsdruck (P_{B}) an dem Anhängerbremsdruckanschluss (22) ausgesteuert wird.

19. Elektropneumatisches Steuermodul (1) nach Anspruch 18, wobei das Bremsrepräsentationssignal (S_{R}, S₅) die Betätigung einer Feststellbremse (6) des Zugwagens (502) repräsentiert.

20. Elektropneumatisches Steuermodul (1) nach Anspruch 18 oder 19, mit einem redundanten Drucksensor (90), der an der Redundanzdruckleitung (16) oder dem Redundanzdruckanschluss (42) angeordnet ist und dazu ausgebildet ist, den pneumatischen Redundanzdruck (P_{R}) an dem Redundanzdruckanschluss (42) zu erfassen und ein entsprechendes Redundanzdruck-Signal (S_{PR}) an der Steuereinheit (ECU) bereitzustellen.

21. Elektropneumatisches Steuermodul (1) nach Anspruch 20, wobei das Redundanzdruck-Signal (S_{PR}) das Bremsrepräsentationssignal (S_{R}) bildet.

22. Elektropneumatisches Steuermodul (1) nach Anspruch 18, wobei das Bremsrepräsentationssignal (S_{R}) von einem weiteren Steuergerät (527, 536) bereitgestellt wird.

23. Zugwagen (502) mit einem elektronischen Steuermodul (1) nach einem der vorherigen Ansprüche 1 bis 22.

## Claims

1. Electropneumatic control module (1) for an electronically controllable pneumatic brake system (520) for a vehicle (500) with a towing unit (502) and a trailer (504), having:
a pneumatic supply port (11) which can be connected to a compressed air supply (525),
a trailer control unit (TCV), which has a trailer control valve unit (65) with one or more electropneumatic valves (RV, IV, OV), a trailer brake pressure port (22) and a trailer supply port (21),
a handbrake unit (EPH), which has a spring reservoir port (4) for a spring reservoir (6) for a towing unit and a handbrake valve unit (8) having one or more electropneumatic valves (10, 55), and
an electronic control unit (ECU) for controlling the trailer control valve unit (65) and the handbrake valve unit (8),
wherein the trailer control unit (TCV) has a first relay valve (20) which has
a relay valve working input (23) connected to the supply port (11), a relay valve output (24) connected to the trailer brake pressure port (22), and a relay valve venting output (26), via which the relay valve output (24) can be connected to a pressure sink (3),
**characterized in that** the first relay valve (20) has a single relay valve control input (25), which opens into a common control chamber (100),
wherein the relay valve control input (25) can be connected to the supply port (11) and/or to a venting means (3) by means of the trailer control valve unit (65) in order to output an operating brake control pressure (P3) in the common control chamber (100) in a controlled manner, and wherein in the case of a failure of the electropneumatic control module (1) a redundancy pressure (PR) can be output to the common control chamber in a controlled manner, in order to output a brake pressure (P_{B}) at the trailer brake pressure port (22) in a controlled manner.

2. The electropneumatic control module (1) according to claim 1, wherein the first relay valve (20) has a single control chamber (100).

3. The electropneumatic control module (1) according to claim 1 or 2, wherein the common control chamber (100) of the first relay valve (20) is limited by a single control piston (102) .

4. The electropneumatic control module (1) according to claim 3, wherein the control piston (102) of the first relay valve (20) has a single control area (103).

5. The electropneumatic control module (1) according to any of the foregoing claims, wherein the trailer valve unit (65) has an electronically switchable inlet valve (IV) with at least a first and a second inlet valve port (67a, 67b), wherein the first inlet valve port (67a) is connected to the supply port (11) and the second inlet valve port (67b) is connected to the control chamber (100) of the first relay valve (20), in order to ventilate the control chamber (100) by means of switching the inlet valve (IV).

6. The electropneumatic control module (1) according to any of the foregoing claims, having
a redundancy pressure port (42) with a first redundancy pressure line (16) for connection of a brake value transmitter (528) or of the brake or control pressure of one of the other vehicle axles (503), via which the brake pressure (P_{B}) at the trailer brake pressure port (22) can be output in a controlled manner.

7. The electropneumatic control module according to any of claims 1 to 5, having a redundancy pressure port (42) via which the brake pressure (P_{B}) at the trailer brake pressure port (22) can be output in a controlled manner, wherein a brake pressure (P_{BV}) of a service brake (530a, 530b) at the redundancy pressure port (42) can be output in a controlled manner.

8. The electropneumatic control module (1) according to claim 6 or 7, wherein the trailer control valve unit (65) has an electronically switchable redundancy valve (RV) with at least a first and a second redundancy valve port (80a, 80b), wherein the first redundancy valve port (80a) is connected to the redundancy pressure port (42) and the second redundancy valve port (80b) is connected to the control chamber (100) of the first relay valve (20) via a second redundancy pressure line (17) in order to output the redundancy pressure (P_{R}) in the control chamber (100) in a controlled manner by means of switching the redundancy valve (RV).

9. The electropneumatic control module (1) according to any of the foregoing claims, wherein the trailer control valve unit (65) has an electrically switchable outlet valve (OV) with at least a first and a second outlet valve port (78a, 78b), wherein the first outlet valve port (78a) is connected to the control chamber (100) of the first relay valve (20), and the second outlet valve port (78b) is connected to a pressure sink (3), in order to ventilate the control chamber (100) by means of switching the outlet valve (OV).

10. The electropneumatic control module (1) according to claim 8, wherein the redundancy valve (RV) is embodied as a 3/2 way valve and has a third redundancy valve port (80c), wherein the third redundancy valve port (80c) is connected to a pressure sink (3).

11. The electropneumatic control module (1) according to claim 8, wherein the second redundancy pressure line (17) is connected to the second outlet valve port (78b), so that in a first switching position of the redundancy valve (RV) when the outlet valve (OV) is opened a redundancy pressure (P_{R}) can be output in a controlled manner from the redundancy pressure port (42), via the redundancy valve (RV) and the outlet valve (OV) to the control chamber (100), and in a second switching position of the redundancy valve (RV) the control chamber (100) can be ventilated via the opened outlet valve (OV) and the redundancy valve (RV).

12. The electropneumatic control module (1) according to claim 8, wherein the redundancy valve (RV) is embodied as a 3/2 way valve and has a third redundancy valve port (80c), wherein the third redundancy valve port (80c) is connected to the supply port (11).

13. The electropneumatic control module (1) according to claim 12, wherein the second redundancy pressure line (17) is connected to the first inlet valve port (67a), so that in a first switching position of the redundancy valve (RV) when the inlet valve (IV) is opened a redundancy pressure (P_{R}) can be output in a controlled manner from the redundancy pressure port (42), via the redundancy valve (RV) and the inlet valve (IV) to the control chamber (100), and in a second switching position of the redundancy valve (RV) a control pressure (P3) can be output in a controlled manner from the supply port (11) via the redundancy valve (RV) and the inlet valve (IV) to the control chamber (100).

14. The electropneumatic control module (1) according to any of the foregoing claims, wherein the electronic control unit (ECU) is set up to
- cause the handbrake valve unit (8) based on a first electronic auxiliary brake signal (S₁) to switch at least one valve (10, 55) of the handbrake valve unit (8) such that a working pressure (P_{A}) on the spring reservoir port (4) can be output in a controlled manner for the temporary and staged ventilation of the spring reservoir (6); and
- cause the trailer control valve unit (65) based on a first electronic auxiliary brake signal (S₁) or a second auxiliary brake signal (S₂) to switch at least one valve (IV) of the trailer control valve unit (65) such that a brake pressure (P_{B}) can be output in a controlled manner at the trailer brake pressure port (22).

15. The electropneumatic control module (1) according to any of the foregoing claims, wherein the electronic control unit (ECU), the trailer control unit (TCV) and the handbrake unit (EPH) are integrated in one module.

16. The electropneumatic control module (1) according to any of the foregoing claims, having a common housing (2), in which at least the components of the electronic control unit (ECU), the trailer control unit (TCV) and the handbrake unit (EPH) are arranged.

17. The electropneumatic control module (1) according to any of the foregoing claims, wherein no inverse relay valve is provided.

18. The electropneumatic control module (1) according to any of the foregoing claims, having an electrical port (561, 591) for the reception of a redundant electronic brake representation signal (S_{R}, S₅), wherein the control unit (ECU) is set up, depending on the received redundant electronic brake representation signal (S_{R}, S₅) to switch at least one valve (IV, RV) of the trailer control valve unit (65) such that a corresponding brake pressure (P_{B}) is output in a controlled manner at the trailer brake pressure port (22).

19. The electropneumatic control module (1) according to claim 18, wherein the brake representation signal (S_{R}, S₅) represents the actuation of a handbrake (6) of the towing unit (502) .

20. The electropneumatic control module (1) according to claim 18 or 19, having a redundant pressure sensor (90), which is arranged on the redundancy pressure line (16) or the redundancy pressure port (42) and is embodied to detect the pneumatic redundancy pressure (P_{R}) at the redundancy pressure port (42) and to provide a corresponding redundancy pressure signal (S_{PR}) at the control unit (ECU) .

21. The electropneumatic control module (1) according to claim 20, wherein the redundancy pressure signal (S_{PR}) forms the brake representation signal (S_{R}).

22. The electropneumatic control module (1) according to claim 18, wherein the brake representation signal (S_{R}) is provided by a further control device (527, 536).

23. A towing unit (502) having an electronic control module (1) according to any of the previous claims 1 to 22.

## Revendications

1. Module de commande (1) électropneumatique pour un système de freinage (520) pneumatique qui peut être commandé électroniquement pour un train de véhicule (500), avec un chariot tracteur (502) et une voiture de remorque (504), avec :
une entrée d'alimentation (11) pneumatique qui peut être reliée à une réserve d'air comprimé (525),
une unité de commande de remorque (TCV) qui présente une unité de valve de commande de remorque (65) avec une ou plusieurs valves électropneumatiques (RV, IV, OV), un raccord de pression de freinage de remorque (22) et un raccord de pression d'alimentation de remorque (21),
une unité de frein de stationnement (EPH) qui présente un raccord d'accumulateur élastique (4) pour un accumulateur élastique (6) pour un chariot tracteur et une unité de valve de frein de stationnement (8) avec une ou plusieurs valves électropneumatiques (10, 55), et
une unité de commande électronique (ECU) pour commander l'unité de valve de commande de remorque (65) et l'unité de valve de frein de stationnement (8),
dans lequel l'unité de commande de remorque (TCV) présente une première valve-relais (20) qui présente
une entrée de travail de valve-relais (23) reliée à l'entrée d'alimentation (11), une sortie de valve-relais (24) reliée au raccord de pression de freinage de remorque (22) et une sortie de purge de valve-relais (26) via laquelle la sortie de valve-relais (24) peut être reliée à un puits de pression (3),
**caractérisé en ce que** la première valve-relais (20) présente une unique entrée de commande de valve-relais (25) qui débouche dans une chambre de commande (100) commune,
dans lequel l'entrée de commande de valve-relais (25) peut être reliée à l'entrée d'alimentation (11) et/ou au puits de pression (3) au moyen de l'unité de valve de commande de remorque (65) pour piloter une pression de commande de frein de service (P3) dans la chambre de commande (100) commune, et dans lequel en cas d'erreur du module de commande (1) électropneumatique une pression de redondance (P_{R}) peut être pilotée jusque dans la chambre de commande commune pour piloter une pression de freinage (P_{B}) au niveau du raccord de pression de freinage de remorque (22).

2. Module de commande (1) électropneumatique selon la revendication 1, dans lequel la première valve-relais (20) présente une unique chambre de commande (100).

3. Module de commande (1) électropneumatique selon la revendication 1 ou 2, dans lequel la chambre de commande (100) commune de la première valve-relais (20) est délimitée par un unique piston de commande (102).

4. Module de commande (1) électropneumatique selon la revendication 3, dans lequel le piston de commande (102) de la première valve-relais (20) présente une unique surface de commande (103).

5. Module de commande (1) électropneumatique selon l'une des revendications précédentes, dans lequel l'unité de valve de commande de remorque (65) présente une valve d'admission (IV) qui peut être commutée électroniquement avec au moins un premier et un second raccord de valve d'admission (67a, 67b), dans lequel le premier raccord de valve d'admission (67a) est relié à l'entrée d'alimentation (11) et le second raccord de valve d'admission (67b) est relié à la chambre de commande (100) de la première valve-relais (20) pour ventiler la chambre de commande (100) au moyen de la commutation de la valve d'admission (IV).

6. Module de commande (1) électropneumatique selon l'une des revendications précédentes, qui présente
un raccord de pression de redondance (42) avec un premier tuyau de refoulement de redondance (16) pour raccorder un capteur de freinage (528) ou la pression de freinage ou de commande de l'un des autres essieux de véhicule (503), via lequel capteur de freinage la pression de freinage (P_{B}) peut être pilotée au niveau du raccord de pression de freinage de remorque (22).

7. Module de commande électropneumatique selon l'une des revendications 1 à 5, qui présente un raccord de pression de redondance (42) via lequel la pression de freinage (P_{B}) peut être pilotée au niveau du raccord de pression de freinage de remorque (22), dans lequel une pression de freinage (P_{BV}) d'un frein de service (530a, 530b) peut être pilotée au niveau du raccord de pression de redondance (42).

8. Module de commande (1) électropneumatique selon la revendication 6 ou 7, dans lequel l'unité de valve de commande de remorque (65) présente une valve de redondance (RV) qui peut être électroniquement commutée avec au moins un premier et un deuxième raccord de valve de redondance (80a, 80b), dans lequel le premier raccord de valve de redondance (80a) est relié au raccord de pression de redondance (42) et le deuxième raccord de valve de redondance (80b) est relié à la chambre de commande (100) de la première valve-relais (20) via un second tuyau de refoulement de redondance (17) pour piloter la pression de redondance (P_{R}) dans la chambre de commande (100) au moyen de la commutation de la valve électropneumatique (RV).

9. Module de commande (1) électropneumatique selon l'une des revendications précédentes, dans lequel l'unité de valve de commande de remorque (65) présente une valve d'évacuation (OV) qui peut être électroniquement commutée avec au moins un premier et un second raccord de valve d'évacuation (78a, 78b), dans lequel le premier raccord de valve d'évacuation (78a) est relié à la chambre de commande (100) de la première valve-relais (20) et le second raccord de valve d'évacuation (78b) est relié à un puits de pression (3) pour ventiler la chambre de commande (100) au moyen de la commutation de la valve d'évacuation (OV).

10. Module de commande (1) électropneumatique selon la revendication 8, dans lequel la valve de redondance (RV) est conçue en tant que distributeur 3/2 voies et présente un troisième raccord de valve de redondance (80c), dans lequel le troisième raccord de valve de redondance (80c) est raccordé à un puits de pression (3).

11. Module de commande (1) électropneumatique selon la revendication 8, dans lequel le second tuyau de refoulement de redondance (17) est relié au second raccord de valve d'évacuation (78b), de sorte que dans une première position de commutation de la valve de redondance (RV), avec la valve d'évacuation (OV) ouverte, une pression de redondance (P_{R}) puisse être pilotée jusque dans la chambre de commande (100) par le raccord de pression de redondance (42) via la valve de redondance (RV) et la valve d'évacuation (OV), et dans une seconde position de commutation de la valve de redondance (RV) la chambre de commande (100) puisse être ventilée via la valve d'évacuation (OV) ouverte et la valve de redondance (RV).

12. Module de commande (1) électropneumatique selon la revendication 8, dans lequel la valve de redondance (RV) est conçue en tant que distributeur 3/2 voies et présente un troisième raccord de valve de redondance (80c), dans lequel le troisième raccord de valve de redondance (80c) est raccordé à l'entrée d'alimentation (11).

13. Module de commande (1) électropneumatique selon la revendication 12, dans lequel le second tuyau de refoulement de redondance (17) est relié au premier raccord de valve d'admission (67a), de sorte que dans une première position de commutation de la valve de redondance (RV), avec la valve d'admission (IV) ouverte, une pression de redondance (P_{R}) puisse être pilotée jusque dans la chambre de commande (100) par le raccord de pression de redondance (42) via la valve de redondance (RV) et la valve d'admission (IV), et dans une seconde position de commutation de la valve de redondance (RV) une pression de commande (P₃) puisse être pilotée jusque dans la chambre de commande (100) par l'entrée d'alimentation (11) via la valve de redondance (RV) et la valve d'admission (IV).

14. Module de commande (1) électropneumatique selon l'une des revendications précédentes, dans lequel l'unité de commande électronique (ECU) est configurée pour
- amener, sur la base d'un premier signal de frein auxiliaire (S₁) électronique, l'unité de valve de frein de stationnement (8) à commuter au moins une valve (10, 55) de l'unité de valve de frein de stationnement (8) de sorte qu'au niveau du raccord d'accumulateur élastique (4) une pression de travail (P_{A}) puisse être pilotée pour purger temporairement et de façon échelonnée l'accumulateur élastique (6) ; et
- amener, sur la base du premier signal de frein auxiliaire (S₁) électronique ou d'un second signal de frein auxiliaire (S₂), l'unité de valve de commande de remorque (65) à commuter au moins une valve (IV) de l'unité de valve de commande de remorque (65) de sorte qu'une pression de freinage (P_{B}) puisse être pilotée au niveau du raccord de pression de freinage de remorque (22).

15. Module de commande (1) électropneumatique selon l'une des revendications précédentes, dans lequel l'unité de commande électronique (ECU), l'unité de commande de remorque (TCV) et l'unité de frein de stationnement (EPH) sont intégrées dans un module.

16. Module de commande (1) électropneumatique selon l'une des revendications précédentes, avec un logement (2) commun dans lequel sont agencées au moins les composantes de l'unité de commande électronique (ECU), de l'unité de commande de remorque (TCV) et de l'unité de frein de stationnement (EPH).

17. Module de commande (1) électropneumatique selon l'une des revendications précédentes, dans lequel aucune valve-relais inversée n'est prévue.

18. Module de commande (1) électropneumatique selon l'une des revendications précédentes, avec un raccord électrique (561, 591) pour recevoir un signal de représentation de freinage (S_{R}, S₅) redondant électronique, dans lequel l'unité de commande électronique (ECU) est configurée pour, en fonction du signal de représentation de freinage (S_{R}, S₅) redondant électronique reçu, commuter au moins une valve (IV, RV) de l'unité de valve de commande de remorque (65) de sorte qu'une pression de freinage (P_{B}) correspondante soit pilotée au niveau du raccord de pression de freinage de remorque (22).

19. Module de commande (1) électropneumatique selon la revendication 18, dans lequel le signal de représentation de freinage (S_{R}, S₅) représente l'actionnement d'un frein de stationnement (6) du chariot tracteur (502).

20. Module de commande (1) électropneumatique selon la revendication 18 ou 19, avec un capteur de pression (90) redondant qui est agencé contre le tuyau de refoulement de redondance (16) ou le raccord de pression de redondance (42) et est conçu pour saisir la pression de redondance (P_{R}) pneumatique contre le raccord de pression de redondance (42) et fournir un signal de pression de redondance (S_{PR}) correspondant à l'unité de commande électronique (ECU).

21. Module de commande (1) électropneumatique selon la revendication 20, dans lequel le signal de pression de redondance (S_{PR}) constitue le signal de représentation de freinage (S_{R}).

22. Module de commande (1) électropneumatique selon la revendication 18, dans lequel le signal de représentation de freinage (S_{R}) est fourni par un autre appareil de commande (527, 536) .

23. Chariot tracteur (502) avec un module de commande (1) électronique selon l'une des revendications précédentes 1 à 22.
